# EUROPEAN PATENT APPLICATION

(11) **EP 1 965 539 A1**
(43) Date of publication of application: **03.09.2008**
(21) Application number: 06834755.8
(22) Date of filing: 15.12.2006
(51) Int. Cl.: H04L 9/32, G06F 21/20, H04L 9/08

(54) **AUTHENTICATION SYSTEM AND AUTHENTICATION DEVICE**

(30) Priority: 20.12.2005 JP 2005366354; 08.12.2006 JP 2006332359
(71) Applicant: Matsushita Electric Industrial Co., Ltd., Kadoma-shi Osaka 571-8501 (JP)
(72) Inventor: MORI, Iichiro c/o Matsushita Electric Industrial Co.,Ltd., 2-1-61,Shiromi Chuo-ku, Osaka-shi Osaka 540-6207 (JP); NAKASHIMA, Shota c/o Matsushita Electric Industrial Co.,Ltd., 2-1-61,Shiromi Chuo-ku, Osaka-shi Osaka 540-6207 (JP)
(74) Representative: Schwabe - Sandmair - Marx
(86) International application number: PCT/JP2006/325012
(87) International publication number: WO 2007/072746

(57) **Abstract**

An authentication system is provided with a server device for generating a random number used for authentication and check data obtained by encrypting the random number using an encryption key, an authentication device for authenticating a device to be authenticated by transmitting the random number transmitted from the server device to the device to be authenticated and comparing reply data transmitted from the device to be authenticated with check data transmitted from the server device, and the device to be authenticated for encrypting the random number transmitted from the authentication device using the encryption key and transmitting the encrypted random number as reply data.

## Description

### TECHNOLOGICAL FIELD

The present invention relates to an authentication system for authenticating a device to be authenticated and an authentication device used for authentication.

### BACKGROUND ART

In recent years, the energy densities of batteries have been significantly increased. However, there are many manufacturers who manufacture battery packs and charging devices for charging battery packs illegally or without any permission, and the charging devices manufactured by such manufacturers are very poor in their quality in many cases. Thus, it has become a major issue to discern whether or not a charging device is the illegally manufactured one and to prevent the damage of a secondary battery and an occurrence of a disaster in the case of charging the secondary battery by such a charging device.

Accordingly, there is known technology for determining whether a battery pack is the legitimate one by giving an ID number to a battery pack and by causing the device main unit to perform an authentication process of reading the ID number from the battery pack and to compare the read ID number with the one stored therein when the battery pack is connected with a device main unit including a charging circuit such as a mobile phone. However, according to this conventional technology, the ID number stored in the battery pack can be relatively easily obtained if communication data transmitted and received between the battery pack and the device main unit are deciphered and there still remains a problem that the battery pack is easily counterfeited using the ID number obtained from such communication data.

Accordingly, patent literature 1 discloses technology as described below. Specifically, a common encryption key is stored in a device main unit as an authentication device and a battery pack as a device to be authenticated. After a random number transmitted from the device main unit is encrypted using the encryption key in the battery pack, the random number is returned to the device main unit, in which the random number encrypted by the battery pack is decrypted. Further, the device main unit confirms whether or not the decrypted random number and the random number transmitted from the device main unit coincide, thereby determining whether or not the battery pack is the legitimate one.

However, according to the technology disclosed in patent literature 1, the device main unit as the authentication device needs to include a random number generation circuit for generating a random number and a decryption circuit for decrypting a cipher. This requires an increase in the circuit scale and the tamper proofness of the hardware itself of such circuits, leading to a problem of a cost increase.
Patent Literature 1:
Japanese Unexamined Patent Publication No. 2003-162986

### DISCLOSURE OF THE INVENTION

In view of the above problems, an object of the present invention is to provide an authentication system capable of authenticating a device to be authenticated while suppressing a circuit scale increase in an authentication device, and the authentication device used in this system.

One aspect of the present invention is directed to an authentication system, comprising a device to be authenticated; an authentication device for authenticating the device to be authenticated; and a server device connected with the authentication device via a network, wherein the server device includes a server-side encryption key storage for storing an encryption key for the authentication beforehand, a check data generating section for generating check data by encrypting specified authentication data used for the authentication by a preset encryption method using the encryption key stored in the server-side encryption key storage, a server-side communicating section for communicating with the authentication device via the network and a server-side transmitting section for causing the server-side communicating section to transmit the authentication data to the authentication device; the authentication device includes a first authenticating-side communicating section for communicating with the server device via the network, a second authenticating-side communicating section for communicating with the device to be authenticated and an authenticating-side transmitting section for causing the second authenticating-side communicating section to transmit the authentication data received by the first authenticating-side communicating section to the device to be authenticated; the device to be authenticated includes an authenticated-side encryption key storage for storing the encryption key beforehand, an authenticated-side communicating section for communicating with the authentication device and an encrypting section for, if the authentication data is received from the second authenticating-side communicating section by the authenticated-side communicating section, encrypting the received authentication data by the encryption method using the encryption key stored in the authenticated-side encryption key storage; the authenticated-side communicating section transmits the data encrypted by the encrypting section as reply data to the second authenticating-side communicating section; and the authentication device further includes an authenticating section for authenticating the device to be authenticated based on the reply data received by the second authenticating-side communicating section and the check data generated by the check data generating section.

According to this construction, in the server device, the specified authentication data is encrypted by the preset encryption method using the encryption key stored in the server-side encryption key storage beforehand to generate the check data. The authentication data is also transmitted to the authentication device by the server device, and is further transmitted to the device to be authenticated by the authentication device. The authentication data is received by the device to be authenticated. In the device to be authenticated, this authentication data received by the device to be authenticated is encrypted by the preset encryption method using the encryption key stored in the authenticated-side encryption key storage beforehand to generate the reply data. This reply data is transmitted from the device to be authenticated to the authentication device. In the authentication device, the authentication of the device to be authenticated is made based on the reply data transmitted from the device to be authenticated and the check data generated by the check data generating section.

In this case, the authentication data used for the authentication and the check data obtained by encrypting this authentication data are generated by the server device. The authentication device can transmit the authentication data transmitted from the server device to the device to be authenticated and can authenticate the device to be authenticated based on the reply data returned from the device to be authenticated and the check data generated by the check data generating section. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

Another aspect of the present invention is directed to an authentication device connected with a server device via a network for authenticating a device to be authenticated, comprising a first authenticating-side communicating section for communicating with the server device via the network; a second authenticating-side communicating section for communicating with the device to be authenticated; an authenticating-side transmitting section for, if specified authentication data transmitted from the server device is received by the first authenticating-side communicating section, causing the second authenticating-side communicating section to transmit the received authentication data to the device to be authenticated; and an authenticating section for, if reply data obtained by encrypting the authentication data using the encryption method and encryption key by the device to be authenticated is received by the second authenticating side communicating section, authenticating the device to be authenticated based on check data obtained by encrypting the authentication data using preset encryption method and encryption key and reply data received by the second authenticating-side communicating section.

According to this construction, if the authentication data transmitted from the server device is received by the first authenticating-side communicating section, the received authentication data is transmitted to the device to be authenticated by the second authenticating-side communicating section. The reply data obtained by encrypting the authentication data using the encryption method and encryption key is transmitted from the device to be authenticated, and the authentication of the device to be authenticated is made based on the received reply data and the check data obtained by encrypting the authentication data using the preset encryption method and encryption key if the reply data is received by the second authenticating-side communicating section.

In this case, the authentication data used for authentication is transmitted from the server device and received by the authentication device. Further, this authentication data is transmitted to the device to be authenticated by the authentication device. By the authentication device, the authentication of the authentication device is made based on the reply data returned by the device to be authenticated and the check data obtained by encrypting the authentication data using the preset encryption method and encryption key. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

### BRIEF DESCRIPTION OF THE DRAWINGS

FIGS. 1 are external perspective views showing exemplary constructions of a mobile phone terminal and a battery pack according to a first embodiment of the invention, wherein FIG. 1A is a front view in a state where the mobile phone terminal is opened and FIG. 1B is a rear view in a state where the mobile phone terminal is opened,
FIGS. 2 are external perspective views seen from behind in a state where the mobile phone terminal is folded, wherein FIG. 2A shows a state where a cover and the battery pack are detached and FIG. 2B shows an example of a method for mounting the battery pack into the mobile phone terminal,
FIG. 3 is an external perspective view showing the mobile phone terminal having the battery pack shown in FIGS. 2 mounted therein and a phone holder for supplying a direct-current voltage to the mobile phone terminal,
FIG. 4 is a conceptual diagram of an example of an authentication system according to one embodiment of the invention,
FIG. 5 is a block diagram showing an exemplary electrical construction of a server device shown in FIG. 4,
FIG. 6 is a block diagram showing exemplary electrical constructions of the mobile phone terminal and the battery pack shown in FIG. 4,
FIG. 7 is a diagram conceptually showing the operation of the authentication system shown in FIG. 4,
FIG. 8 is a flow chart showing exemplary operations of generating a random number and check data in the server device shown in FIG. 5 and storing them in the mobile phone terminal shown in FIG. 6,
FIG. 9 is a flow chart showing an exemplary operation of authenticating the battery pack by the mobile phone terminal shown in FIG. 6,
FIG. 10 is a flow chart showing an exemplary operation of rewriting an encryption key stored in an authenticated-side encryption key storage in the authentication system shown in FIG. 4,
FIG. 11 is a flow chart showing the exemplary operation of rewriting the encryption key stored in the authenticated-side encryption key storage in the authentication system shown in FIG. 4,
FIG. 12 is a flow chart showing the exemplary operation of rewriting the encryption key stored in the authenticated-side encryption key storage in the authentication system shown in FIG. 4,
FIG. 13 is a flow chart showing another exemplary operation of rewriting the encryption key stored in the authenticated-side encryption key storage in the authentication system shown in FIG. 4,
FIG. 14 is a flow chart showing the other exemplary operation of rewriting the encryption key stored in the authenticated-side encryption key storage in the authentication system shown in FIG. 4,
FIG. 15 is a block diagram showing an exemplary electrical construction of a server device used in an authentication system according to a second embodiment of the invention,
FIG. 16 is a block diagram showing an exemplary electrical construction of a mobile phone terminal used in the authentication system according to the second embodiment of the invention,
FIG. 17 is a diagram conceptually showing operations of the authentication system according to the second embodiment of the invention,
FIG. 18 is a flow chart showing exemplary operations of the authentication system according to the second embodiment of the invention,
FIG. 19 is a diagram conceptually showing operations of an authentication system according to a third embodiment of the invention,
FIG. 20 is a block diagram showing an exemplary construction of a server device shown in FIG. 19,
FIG. 21 is a block diagram showing exemplary constructions of a battery pack and an ID tag shown in FIG. 19,
FIG. 22 is a diagram showing an example of a plurality of battery packs using mutually different encryption methods,
FIG. 23 is a conceptual diagram showing a modification of the authentication system shown in FIG. 19, and
FIG. 24 is a block diagram showing an exemplary construction of a server device shown in FIG. 23.

### BEST MODES FOR EMBODYING THE INVENTION

Hereinafter, embodiments of the present invention are described with reference to the accompanying drawings. In the respective drawings, constructions identified by the same reference numerals are identical and are not repeatedly described.

### (First Embodiment)

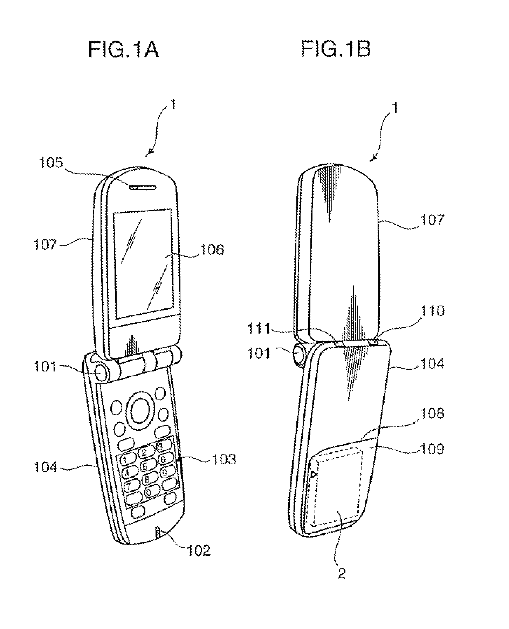

FIGS. 1 are external perspective views showing exemplary constructions of a mobile phone terminal and a battery pack according to a first embodiment of the invention. The mobile phone terminal 1 shown in FIGS. 1 is constructed to be foldable substantially in its center by the presence of a hinge 101, and FIGS. 1 show a state where the mobile phone terminal 1 is opened. FIG. 1A is a front view in the state where the mobile phone terminal is opened, and FIG. 1B is a rear view in the state where the mobile phone terminal is opened.

As shown in FIG. 1A, the mobile phone terminal 1 is constructed such that a holding part 104 including a microphone 102 for converting user's voices into electrical signals and operation keys 103 for receiving the operation of the user and a display part 107 including a speaker 105 for outputting sounds and a liquid crystal display 106 are connected via the hinge 101.

Further, as shown in FIG. 1B, a detachable cover 108 is mounted on the rear surface of the mobile phone terminal 1. If the cover 108 is detached, a recess 109 formed in the rear surface of the mobile phone terminal 1 and a battery pack 2 mounted in the recess 109 appear. Electrodes 110, 111 are provided at an end of the holding part 104.

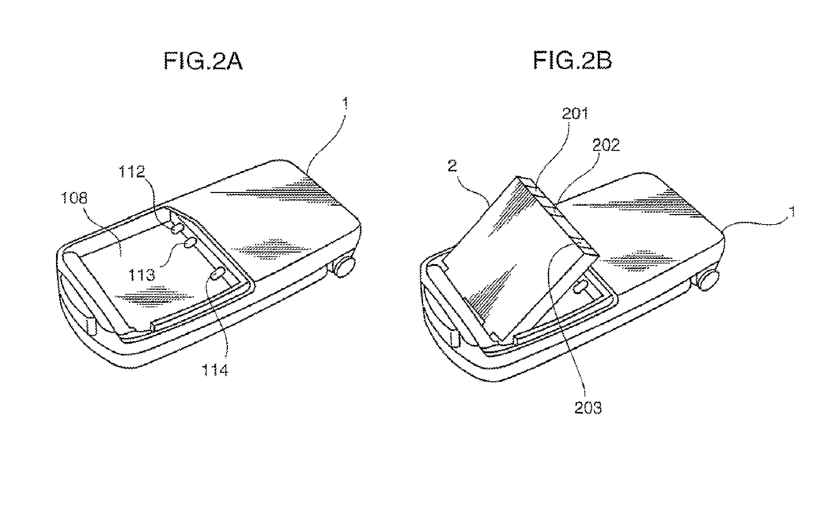

FIGS. 2 are external perspective views seen from behind in a state where the mobile phone terminal 1 is folded. FIG. 2A shows a state where the cover 108 and the battery pack 2 are detached. As shown in FIG. 2A, connection terminals 112, 113 and 114 in the form of projections for the connection with the battery pack 2 are provided on a side surface of the recess 109. FIG. 2B shows an example of a method for mounting the battery pack 2 into the mobile phone terminal 1. As shown in FIG. 2B, electrodes 201, 202 and 203 used for the connection with the mobile phone terminal 1 are provided at an end of the battery pack 2. By fitting the battery pack 2 into the recess 109, the connection terminals 112, 113 and the 114 and the electrodes 201, 202 and 203 are respectively connected.

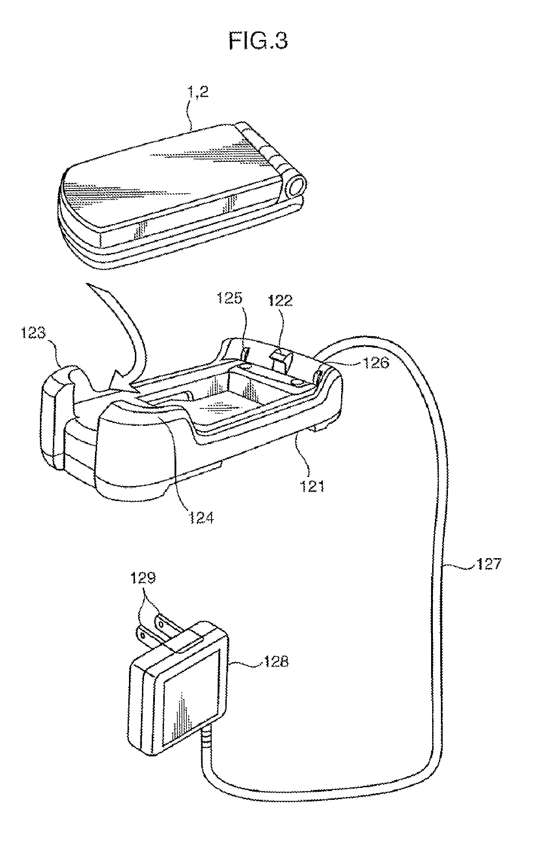

FIG. 3 is an external perspective view showing the mobile phone terminal 1 having the battery pack 2 mounted therein and a phone holder 121 for supplying a direct-current voltage to the mobile phone terminal 1. The phone holder 121 shown in FIG. 3 includes projections 122, 123 and 124 formed to hold the mobile phone terminal 1 at three positions. By mounting the mobile phone terminal 1 between the projections 122, 123 and 124, the mobile phone terminal 1 can be held by the projections 122, 123 and 124. Connection terminals 125, 126 are provided on the projection 122. By mounting the mobile phone terminal 1 into the phone holder 121, the electrodes 110, 111 of the mobile phone terminal 1 are respectively connected with the connection terminals 125, 126.

An AC/DC converter 128 is connected to the phone holder 121 via a cable 127. By connecting a plug 129 provided on the AC/DC converter 128 with, for example, an unillustrated household outlet, a commercial alternating-current voltage AC100V is, for example, supplied to the AC/DC converter 128 via the plug 129 and converted into a direct-current voltage Vdc1 by the AC/DC converter 128 and the direct-current voltage Vdc1 is supplied to the electrodes 110, 111 of the mobile phone terminal 1 via the cable 127 and the connection terminals 125, 126.

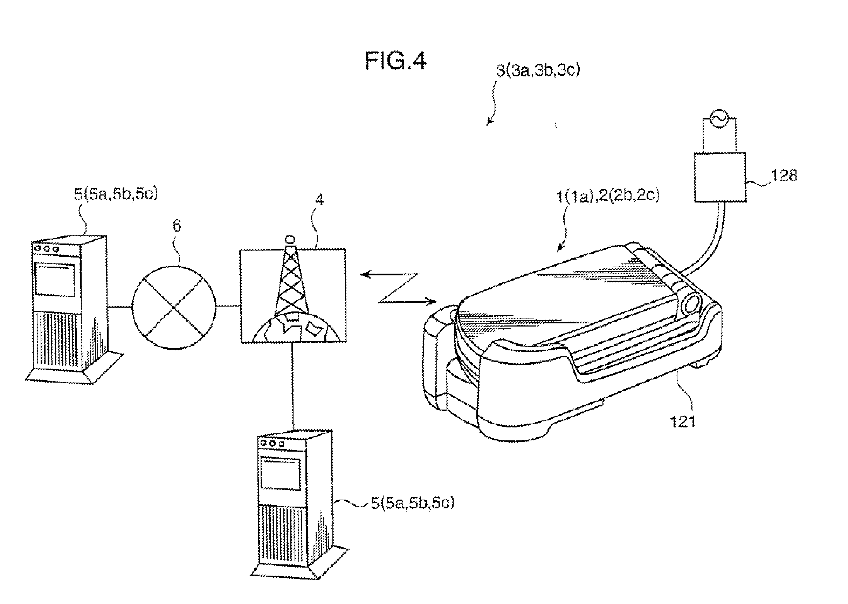

FIG. 4 is a conceptual diagram showing an example of an authentication system according to a first embodiment of the present invention. An authentication system 3 shown in FIG. 4 is provided with a mobile phone base station 4, a server device 5 connected to the mobile phone base station 4, the mobile phone terminal 1 and the battery pack 2 mounted in the mobile phone terminal 1. Further, the mobile phone terminal 1 is mounted in the phone holder 121, to which the direct-current voltage Vdc1 is, for example, supplied by the AC/DC converter 128. Then, the direct-current voltage Vdc1 is supplied from the phone holder 121 to the mobile phone terminal 1.

In this way, the server device 5 and the mobile phone terminal 1 are constructed to be able to transmit and receive data by radio communication via the mobile phone base station 4. It should be noted that the server device 5 may be connected to the mobile phone base station 4, for example, via a network 6 such as Internet or a public line.

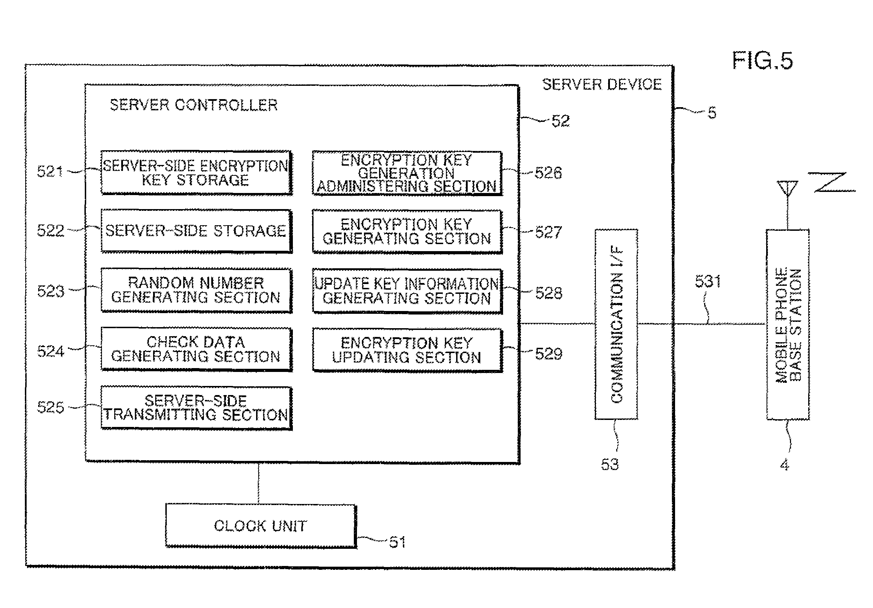

FIG. 5 is a block diagram showing an exemplary electrical construction of the server device 5. The server device 5 shown in FIG. 5 includes a clock unit 51, a server controller 52 and a communication I/F 53 (server-side communicating section). The clock unit 51 is constructed using a clock IC (Integrated Circuit) such as a real-time clock. The clock unit 51 is a calendar timer for measuring the passage of time to generate calendar information and time information such as present year, month and date and outputting the generated information to the server controller 52.

The communication I/F 53 is connected to the mobile phone base station 4, for example, via a LAN (Local Area Network) 531. The communication I/F 53 converts a signal from the server controller 52 into a communication signal in accordance with a communication protocol of the LAN 531 and transmits it to the mobile phone base station 4, and converts a communication signal from the LAN 531 into data of the format processable by the server controller 52 and outputs it to the server controller 52.

The server controller 52 includes a CPU (Central Processing Unit) for performing, for example, a specified arithmetic processing, a nonvolatile ROM (Read Only Memory) and a HDD (Hard Disk Drive) storing specified control programs, a RAM (Random Access Memory) for temporarily saving data, their peripheral circuits and the like. The server controller 52 further includes a server-side encryption key storage 521 and a server-side storage 522 constructed using, for example, the HDD. The server controller 52 also functions as a random number generating section 523 (authentication data generating section), a check data generating section 524, a server-side transmitting section 525, an encryption key generation administrating section 526, an encryption key generating section 527, an update key information generating section 528 and an encryption key updating section 529.

The server-side encryption key storage 521 stores an encryption key used for the authentication of the battery pack 2 beforehand. The random number generating section 523 quasi generates a random number (authentication data) using, for example, a specified random number generation algorithm. It is not always necessary to use a random number as the authentication data, and preset fixed data, a value obtained by a regular progression such as an arithmetic progression or a geometric progression or the like may be, for example, used instead of the random number.

The check data generating section 524 generates check data by encrypting the random number generated by the random number generating section 523 by a preset encryption method using an encryption key stored in the server-side encryption key storage 521. Usable encryption methods include, for example, common key encryption methods such as DES (Data Encryption Standard), public key encryption methods such as RSA (Rivest, Shamir, Adleman's method) and ECC (Elliptic Curve Cryptosystem), hash function methods represented by SHA-1 and various other encryption methods.

The server-side storage 522 stores the random number generated by the random number generating section 523 and the check data generated by the check data generating section 524. The server-side transmitting section 525 causes the random number and the check data stored in the server-side storage 522 or update key information generated by the update key information generating sections 528 to be transmitted to the mobile phone terminal 1 via the LAN 523 and the mobile phone base station 4 by the communication I/F 53.

The encryption key generating section 527 generates a new encryption key using, for example, a specified random number generation algorithm. The encryption key generation administering section 526 causes the encryption key generating section 527 to generate a new encryption key regularly, e.g. upon every passage of a suitable period such as one month, six months or one year, for example, based on the calendar information generated by the clock unit 51 to prevent the encryption key from being decrypted by a third party.

The encryption key generating section 527 may generate a new encryption key as scheduled based on, for example, a preset (programmed) schedule (plan) using the clock unit 51. For example, the encryption key generating section 527 may generate a new key if the number of authentication accesses or a cumulative operating time of the device reaches a preset (programmed) access number or cumulative operating time.

The update key information generating section 528 generates update key information by encrypting the new encryption key generated by the encryption key generating section 527 by the above encryption method using the encryption key stored in the server-side encryption key storage 521. The encryption key updating section 529 stores the new encryption key generated by the encryption key generating section 527 in the server-side encryption key storage 521.

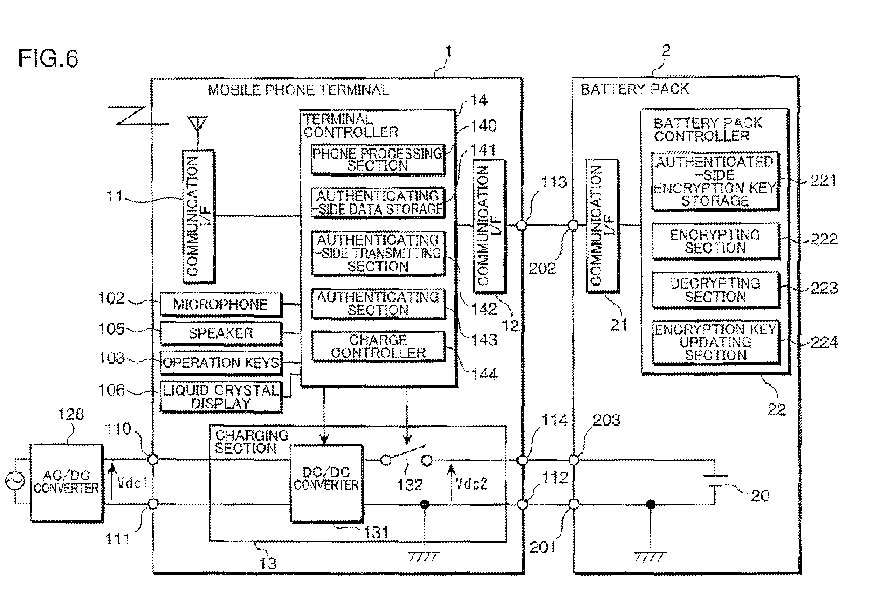

FIG. 6 is a block diagram showing exemplary electrical constructions of the mobile phone terminal 1 and the battery pack 2 shown in FIG. 1. The mobile phone terminal 1 shown in FIG. 6 includes, for example, a communication I/F 11 (first authenticating-side communicating section), a communication I/F 12 (second authenticating-side communicating section), a charging section 13, a terminal controller 14, the microphone 102, speaker 105, the operation keys 103 and the liquid crystal display 106.

The communication I/F 11 is a radio communication circuit of the mobile phone. For example, the communication I/F 11 converts a signal from the terminal controller 14 into a radio signal and transmits it to the mobile phone base station 4 and converts a radio signal received from the mobile phone base station 4 into data of the format processable by the terminal controller 14 and outputs it to the terminal controller 14 by a communication method such as a PDC (Personal Digital Cellular) method, a GSM (Global System for Mobile Communication) method or a CDMA (Code Division Multiple Access) method.

The communication I/F 12 is, for example, a serial communication circuit for converting a parallel signal outputted from the terminal controller 14 into a serial signal and outputting it to the battery pack 2 via the connection terminal 113, and converting a serial signal outputted from the battery pack 2 and received by the connection terminal 113 into a parallel signal and outputting it to the terminal controller 14. The communication I/F 12 is constructed using, for example, a USART (Universal Synchronous and Asynchronous Receiver-Transmitter).

The charging section 13 includes a DC/DC converter 131 and a switch 132. The DC/DC converter 131 converts the direct-current voltage Vdc1 outputted from the AC/DC converter 128 into a direct-current voltage Vdc2 in accordance with a control signal from the terminal controller 14 and supplies the direct-current voltage Vdc2 to the electrode 203 of the battery pack 2 via the connection terminal 114. The switch 132 is a switch constructed using, for example, a transistor and opens and closes in accordance with a control signal from the terminal controller 14. The connection terminal 112 is grounded.

The terminal controller 14 includes a CPU for performing, for example, a specified arithmetic processing, a ROM as a nonvolatile storage device storing a specified control program, a FeRAM (Ferroelectric Random Access Memory) and an EEPROM (Electrically Erasable and Programmable Read Only Memory) as rewritable nonvolatile storage devices, a RAM for temporarily saving data, their peripheral circuits and the like. The terminal controller 14 also includes an authenticating-side data storage 141 constructed using, for example, the FeRAM. Further, the terminal controller 14 functions as a phone processing section 140, an authenticating-side transmitting section 142, an authenticating section 143 and a charge controller 144 by implementing, for example, the control program stored in the ROM.

The phone processing section 140 causes the communication I/F 11 to transmit a radio signal to the mobile phone base station 4 based on a telephone number a user inputted, for example, by means of the operation keys 103, thereby making a phone call, causes the communication I/F 11 to transmit a sound signal outputted from the microphone 102 to be transmitted as a radio signal to the mobile phone base station 4, convert the received radio signal by the communication I/F 11 into a sound signal, thereby causing the speaker 105 to output a sound, and causes the liquid crystal display 106 to display a message. In this way, the phone processing section 140 performs phone processing as the mobile phone terminal.

The authenticating-side data storage 141 stores the random number and the check data received from the server device 5 via the mobile phone base station 4 by the communication I/F 11. The authenticating-side transmitting section 142 causes the communication I/F 12 to transmit the random number stored in the authenticating-side data storage 141 to the battery pack 2.

The authenticating section 143 compares reply data from the battery pack 2 received by the communication I/F 12 and the check data stored in the authenticating-side data storage 141 and judges a success of authentication if the two data coincide while judging a failure of authentication unless they coincide.

The charge controller 144 turns the switch 132 off (open) to prohibit the charging of the battery pack 2 by the charging section 13 if the failure of authentication was judged by the authenticating section 143. Alternatively, the charge controller 144 may output a control signal to set the direct-current voltage Vdc2 outputted from the DC/DC converter 131 lower than the direct-current voltage Vdc2 of, e.g. 4.2 V outputted from the DC/DC converter 131 when the success of authentication was judged by the authenticating section 143, for example, to set the direct-current voltage Vdc2 to 4.0 V if the failure of authentication was judged.

The battery pack 2 includes a secondary battery 20, a communication I/F 21 (authenticated-side communicating section) and a battery pack controller 22. A negative terminal of the secondary battery 20 is connected to the electrode 201 and grounded, whereas a positive terminal of the secondary battery 20 is connected to the electrode 203. Thus, the respective parts in the mobile phone terminal 1 are driven by power supplied from the secondary battery 20 to the mobile phone terminal 1 via the electrode 203 and the connection terminal 114, and the secondary battery 20 is charged with the direct-current voltage Vdc2 applied between the electrodes 201, 203 via the connection terminals 112, 114.

The communication I/F 21 is a serial communication circuit constructed substantially similarly to the communication I/F 12 in the mobile phone terminal 1. For example, the communication I/F 21 converts a parallel signal outputted from the battery pack controller 22 into a serial signal and transmits it to the mobile phone terminal 1 via the electrode 202, and converts a serial signal transmitted from the mobile phone terminal 1 and received by the electrode 202 into a parallel signal and outputs it to the battery pack controller 22.

The battery pack controller 22 includes a CPU for performing, for example, a specified arithmetic processing, a ROM as a nonvolatile storage device storing a specified control program, a FeRAM and an EEPROM as rewritable nonvolatile storage devices, a RAM for temporarily saving data, their peripheral circuits and the like. The battery pack controller 22 also includes an authenticated-side encryption key storage 221 constructed using, for example, the FeRAM. Further, the battery pack controller 22 functions as an encrypting section 222, a decrypting section 223 and an encryption key updating section 224 by implementing, for example, the control program stored in the ROM.

The same encryption key as the one stored in the server-side encryption key storage 521 is stored in the authenticated-side encryption key storage 221 beforehand. The encrypting section 222 encrypts a random number received from the mobile phone terminal 1 by the communication I/F 21 by the same encryption method as the one used in the check data generating section 524 of the server device 5 using the encryption key stored in the authenticated-side encryption key storage 221, and causes the communication I/F 21 to transmit this encrypted random number as reply data to the mobile phone terminal 1.

The decrypting section 223 decrypts the received update key information using the encryption key stored in the authenticated-side encryption key storage 221 if the update key information is received by the communication I/F 21. The encryption key updating section 224 stores the encryption key decrypted by the decrypting section 223 as a new encryption key in the authenticated-side encryption key storage 221.

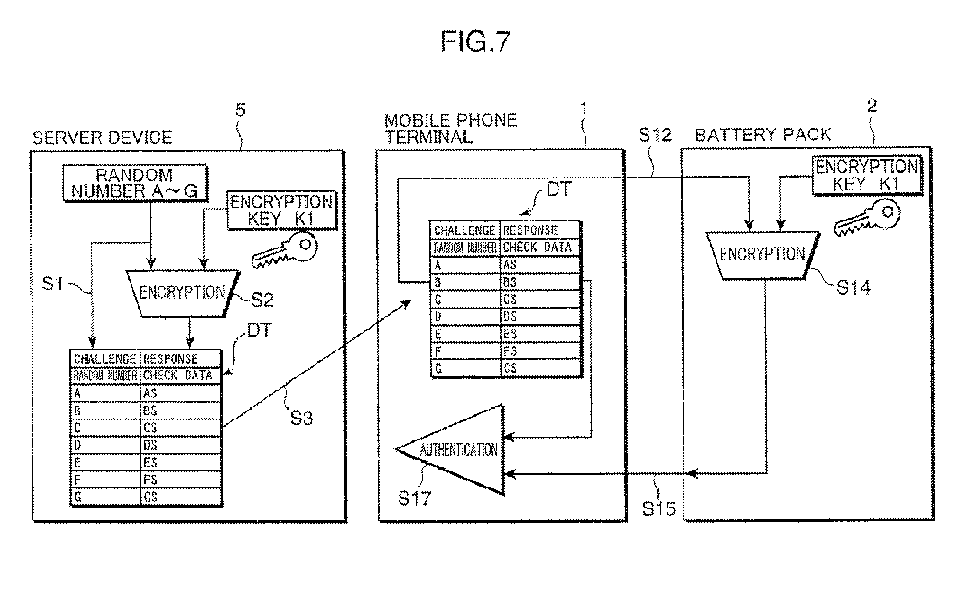

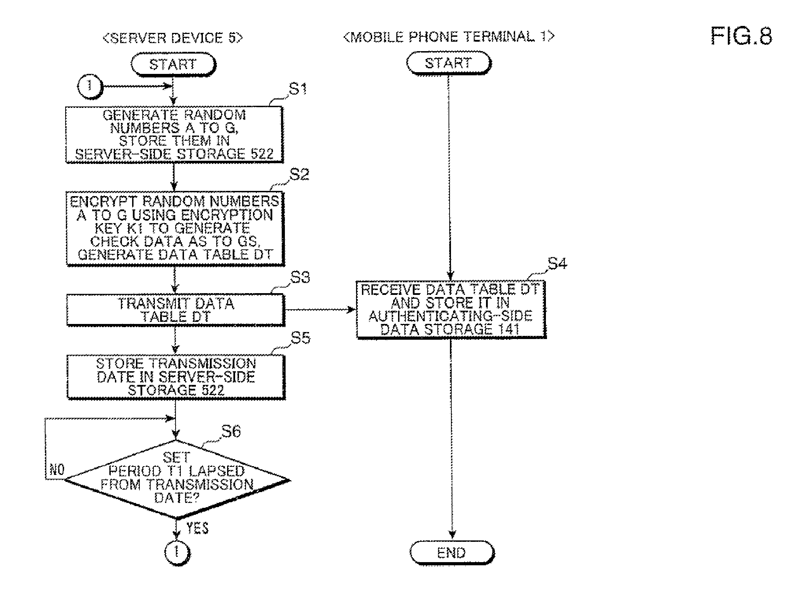

Next, operations of the authentication system 3 and the mobile phone terminal 1 constructed as described above are described. FIG. 7 is a diagram conceptually showing the operation of the authentication system 3, and FIG. 8 is a flow chart showing exemplary operations of generating random numbers and check data in the server device 5 and storing them in the mobile phone terminal 1. In the following flow charts, the same operations are identified by the same step numbers and are not repeatedly described.

The same encryption key K1 is stored in the server-side encryption key storage 521 of the server device 5 and the authenticated-side encryption key storage 221 of the battery pack 2 beforehand. A plurality of random numbers, e.g. random numbers A to G are generated by the random number generating section 523 in the server device 5 and stored in the server-side storage 522 (Step S1). By the check data generating section 524, the random numbers A to G are encrypted by a specified encryption method, e.g. DES using the encryption key K1 stored in the server-side encryption key storage 521 to generate check data AS to GS and the check data AS to GS are stored in the server-side storage 522 in correspondence with the random numbers A to G, whereby a data table DT is generated (Step S2).

Here, the random numbers A to G and the check data AS to GS are respectively used as those equivalent to challenges and responses in the so-called challenge and response authentication.

By the server-side transmitting section 525, the data table DT stored in the server-side storage 522 is transmitted from the communication I/F 53 to the mobile phone base station 4 via the LAN 531, and is further transmitted as a radio signal to the mobile phone terminal 1 by the mobile phone base station 4 (Step S3).

Subsequently, the data table DT transmitted as the radio signal from the mobile phone base station 4 is received by the communication I/F 11 and stored in the authenticating-side data storage 141 in the mobile phone terminal 1 (Step S4).

On the other hand, by the server-side transmitting section 525 in the server device 5, date information indicating the present date is read from the clock unit 51 and stored in the server-side storage 522 as transmission date information of the data table DT (Step S5). Then, by the server-side transmitting section 525, the date information generated by the clock unit 51 and the transmission date information of the data table DT stored in the server-side storage 522 are compared, and this routine returns back to Step S1 to generate a new data table DT and transmit it to the mobile phone terminal 1, for example, if the lapse of a preset period T1 is detected. A suitable period for making decryption by a third party difficult, e.g. one week or one month is set as the period T1.

Thus, it is possible to regularly generate random numbers and check data and transmit them to the mobile phone terminal 1 to be stored.

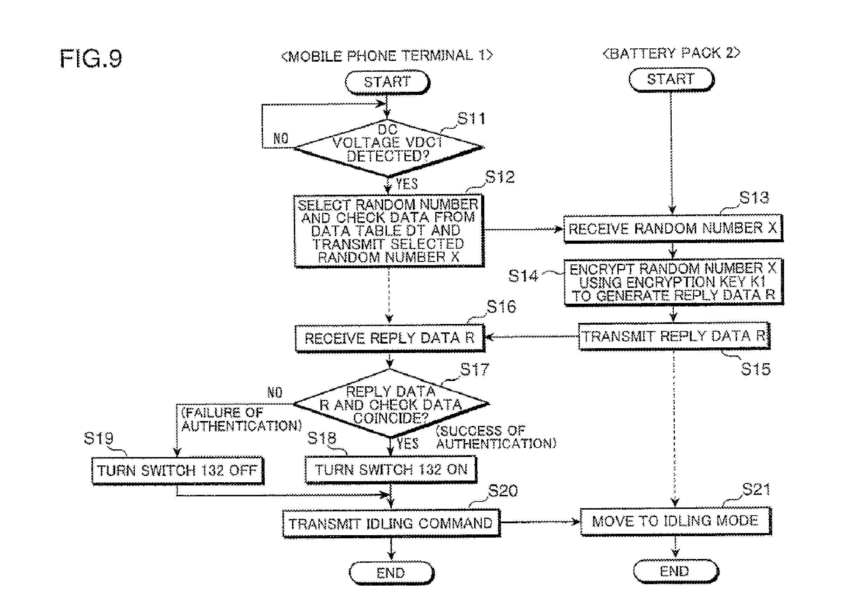

Next, an authenticating operation of the battery pack 2 by the mobile phone terminal 1 is described. FIG. 9 is a flow chart showing an exemplary authenticating operation of the battery pack 2 by the mobile phone terminal 1. At first, in the mobile phone terminal 1, the plug 129 is, for example, not connected with the outlet and, thus, the AC/DC converter 128 does not output the direct-current voltage Vdc1. The switch 132 is turned off (opened) in accordance with a control signal from the charge controller 144, wherefore the secondary battery 20 is not being charged and the respective parts in the mobile phone terminal 1 are operated by the power supplied from the secondary battery 20 via the electrodes 201, 202 and the connection terminals 112, 114.

If the plug 129 is, for example, connected with the outlet to output the direct-current voltage Vdc1 from the AC/DC converter 128 and the start of the supply of the direct-current voltage Vdc1 from the AC/DC converter 128 to the mobile phone terminal 1 is detected, for example, by an unillustrated voltage detection circuit (YES in Step S11), Step S12 follows to make authentication prior to the charging of the battery pack 2 (Step S11).

Next, by the authenticating-side transmitting section 142, any one of the random numbers A to G in the data table DT stored in the authenticating-side data storage 141, e.g. the random number B is selected and transmitted as a random number X from the communication I/F 12 to the battery pack 2 via the connection terminal 113 and the electrode 202 (Step S12). In this case, the random number X is equivalent to a challenge in the so-called challenge and response authentication. It should be noted that the authenticating-side transmitting section 142 may select the random number, for example, in an order of storage in the authenticating-side data storage 141 or randomly.

Subsequently, the random number X is received by the communication I/F 21 of the battery pack 2 (Step S13), and the random number X is encrypted by the same encryption method as the one used in the check data generating section 524 using the encryption key K1 stored in the authenticated-side encryption key storage 221 by the encrypting section 222 to generate reply data R (Step S14), and the reply data R is transmitted from the communication I/F 21 to the mobile phone terminal 1 via the electrode 202 and the connection terminal 113 (Step S15). In this case, the reply data R is equivalent to a response in the so-called challenge and response authentication.

Subsequently, the reply data R is received by the communication I/F 12 in the mobile phone terminal 1 (Step S16), and the reply data R and the check data BS stored in correspondence with the random number B in the authenticating-side data storage 141 are compared by the authenticating section 143 (Step S17). If the two data coincide, the success of authentication is judged (YES in Step S17), the switch 132 is turned on (closed) by the charge controller 144 (Step S18), and the direct-current voltage Vdc2 outputted from the DC/DC converter 131 is applied to the secondary battery 20 via the switch 132, the connection terminal 114 and the electrode 203 to charge the secondary battery 20.

On the other hand, if the reply data R and the check data BS stored in correspondence with the random number B are compared (Step S17) and the two data do not coincide, the failure of authentication is judged (NO in Step S17), the switch 132 is turned off (opened) by the charge controller 144 and the secondary battery 20 is not charged (Step S19).

Subsequently, an idling command for setting the battery pack 2 in a power-saving state is transmitted from the communication I/F 12 to the battery pack 2 by the authenticating-side transmitting section 142 (Step S20), the idling command is received by the communication I/F 21, the supply of power for operating circuits excluding those necessary to receive a signal from the mobile phone terminal 1 such as the communication I/F 21 is stopped by an unillustrated power supply control circuit to set an idling state, and a standby power in the battery pack 2 is reduced (Step S21).

If the battery pack 2 is judged to be the legitimate one by the above operations of Steps S1 to S19, the same encryption keys K1 are stored in the server-side encryption key storage 521 in the server device 5 and in the authenticating-side electrode storage 221 in the battery pack 2, and the encryption method used in the check data generating section 524 and that used in the encrypting section 222 are the same. Thus, the reply data R and the check data BS coincide to lead to the success of authentication, whereby the switch 132 is turned on to charge the battery pack 2. On the other hand, unless the battery pack 2 is the legitimate one, a third party cannot know the encryption key stored in the server-side encryption key storage 521 and the encryption method used in the check data generating section 524. Thus, no reply data R coinciding with the check data BS can be generated to lead to the failure of authentication, wherefore the battery pack 2 is not charged.

In this way, it can be prevented to charge the battery pack 2 that is counterfeited and has a very poor quality. Further, since the mobile phone terminal 1 can authenticate the battery pack 2 only by comparing the reply data R obtained from the battery pack 2 and the check data transmitted from the server device 5 and needs not include a random number generation circuit for generating random numbers and a decryption circuit for decrypting the reply data R, the circuit scale increase in the mobile phone terminal 1 can be suppressed.

Further, since the mobile phone terminal 1 includes no decryption circuit for decrypting the reply data R and stores no encryption key K1, even if the mobile phone terminal 1 is disassembled by a third party, it is difficult to analyze the encryption method and the encryption key used for the authentication of the battery pack 2, whereby it can be made more difficult to counterfeit the battery pack 2 by improving the tamper proofness.

Since one of the plurality of random numbers stored as the data table DT in the authenticating-side data storage 141 is selected and transmitted to the battery pack 2 by the operation in Step S12, the random number transmitted from the mobile phone terminal 1 to the battery pack 2 is changed each time, with the result that it can be made more difficult to analyze the encryption method and the encryption key used for the authentication of the battery pack 2 in accordance with a signal transmitted from the mobile phone terminal1 to the battery pack 2 and, hence, to counterfeit the battery pack 2. Further, since it is not necessary to transmit the random number and the check data from the server device 5 to the mobile phone terminal 1 every time authentication is made, a communication processing load between the server device 5 and the mobile phone terminal 1 can be reduced.

Since the content of the data table DT is regularly updated to change random numbers to be transmitted from the mobile phone terminal 1 to the battery pack 2 by the operations in Steps S1 to S6, it can be made more difficult to analyze the encryption method and the encryption key used for the authentication of the battery pack 2 in accordance with a signal transmitted from the mobile phone terminal 1 to the battery pack 2 and, hence, to counterfeit the battery pack 2.

The random number generating section 523 and the check data generating section 524 in the server device 5 generate a plurality of random numbers and a plurality of corresponding check data and transmit them in the form of the data table DT to the mobile phone terminal 1 in the above example. However, random numbers and check data may be generated and transmitted to the mobile phone terminal 1 one by one without being restricted to the example of transmitting a plurality of random numbers and a plurality of check data to the mobile phone terminal 1.

Upon authenticating the battery pack 2, the mobile phone terminal 1 may obtain a new random number and new check data and delete them after the authentication processing of the battery pack 2 every time transmitting, for example, a request signal for the random number and the check data to the server device 5. In this case, the tamper proofness can be further improved since the random number and check data are only temporarily stored in the authenticating-side data storage 141 of the mobile phone terminal 1 during the execution of the authentication processing.

In Steps S17 to S19, the charge controller 144 may start the charging of the secondary battery 20 by turning the switch 132 on regardless of the authentication result, and may set the direct-current voltage Vdc2 outputted from the DC/DC converter 131 to a charge voltage optimized for the legitimate secondary battery 20, e.g. 4.2 V if the authentication was successful (YES in Step S17) while setting the direct-current voltage Vdc2 outputted from the DC/DC converter 131 to a voltage lower than the charge voltage optimized for the legitimate secondary battery 20, e.g. 4.0 V if the authentication was unsuccessful (NO in Step S17).

In this case, the legitimate secondary battery 20 is charged with the optimized charge voltage, thereby making it possible to shorten a charging time and increase a cycle life, whereas the charge voltage is reduced for the illegitimate secondary battery 20, thereby making it possible to reduce a possibility of deteriorating the quality.

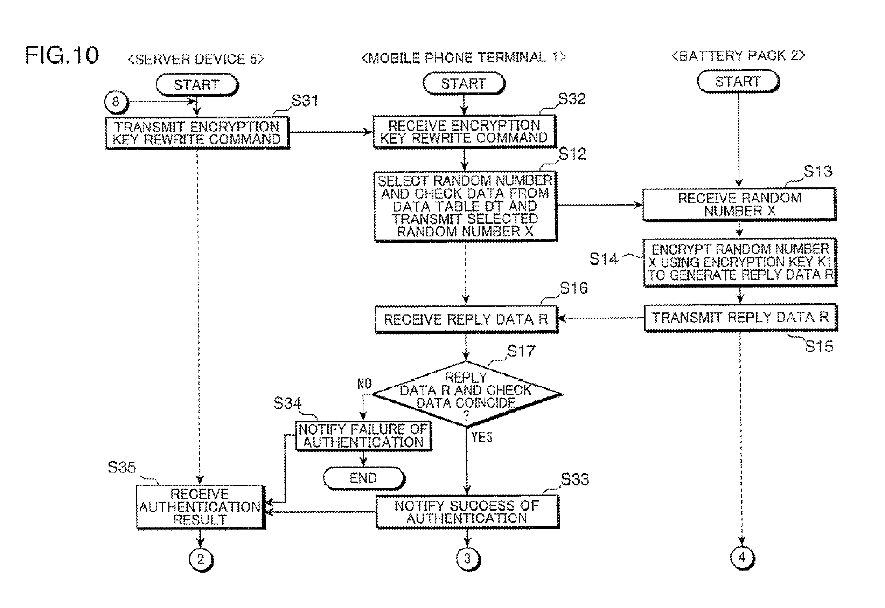

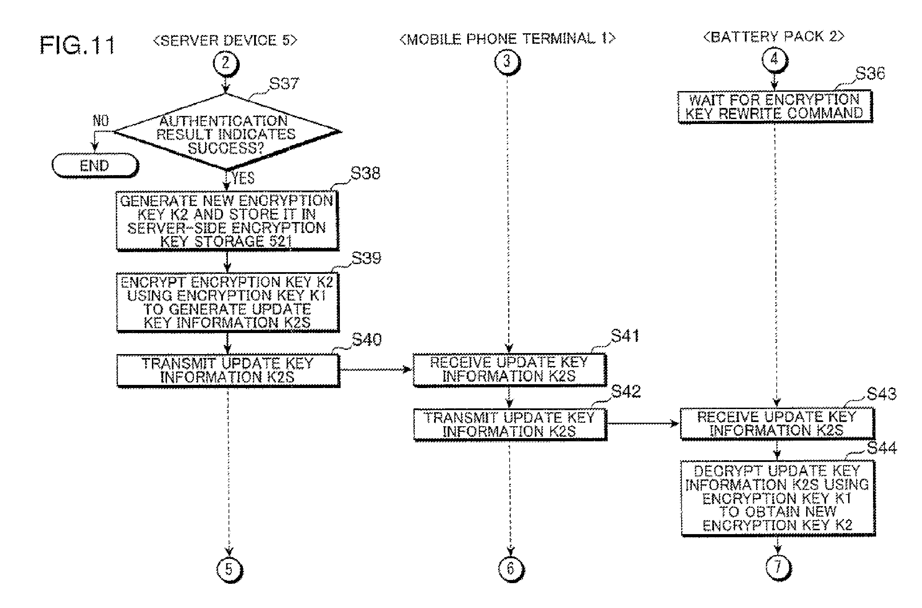

Next, an operation of rewriting the encryption key stored in the authenticated-side encryption key storage 221 of the battery pack 2 is described. FIGS. 10, 11 and 12 are flow charts showing an exemplary operation of rewriting the encryption key stored in the authenticated-side encryption key storage 221.

First, by the server-side transmitting section 525 in the server device 5, an encryption key rewrite command for instructing the battery pack 2 to rewrite the encryption key is transmitted from the communication I/F 53 to the mobile phone base station 4 and further transmitted as a radio signal from the mobile phone base station 4 to the mobile phone terminal 1 (Step S31).

Subsequently, in the mobile phone terminal 1, the encryption key rewrite command is received by the communication I/F 11 (Step S32). Hereinafter, the battery pack 2 is authenticated using the encryption key K1 by operations similar to those in Steps S12 to S17 described above.

In the case of the success of authentication in Step S17 (YES in Step S17), information to the effect that the authentication was successful is transmitted from the communication I/F 11 to the server device 5 via the mobile phone base station 4 by the authenticating-side transmitting section 142 (Step S33). On the other hand, if the authentication was unsuccessful (NO in Step S17), information to the effect that the authentication was unsuccessful is transmitted from the communication I/F 11 to the server device 5 via the mobile phone base station 4 by the authenticating-side transmitting section 142 to complete the processing in the mobile phone terminal 1 (Step S34).

Subsequently, in the server device 5, information indicating the authentication result is received by the communication I/F 53 (Step S35). On the other hand, in the battery pack 2, the communication I/F 21 is in a standby state to receive the encryption key rewrite command (Step S36).

Then, in the server device 5, it is confirmed whether or not the authentication result information received by the communication I/F 53 indicates the success of authentication (Step S37) and the processing in the server device 5 is completed if the failure of authentication is indicated (NO in Step S37). On the other hand, if the success of authentication is indicated (YES in Step S37), a new encryption key K2 is generated using a random number by the encryption key generating section 527 and stored in the server-side encryption key storage 521 by the encryption key updating section 529 (Step S38).

Subsequently, the encryption key K2 is encrypted by the same encryption method as the one used in the check data generating section 524 using the encryption key K1 stored in the server-side encryption key storage 521 by the update key information generating section 528, thereby generating update key information K2S (Step S39), and this update key information K2S is transmitted from the communication I/F 53 to the mobile phone terminal 1 via the mobile phone base station 4 by the server-side transmitting section 525 (Step S40).

Subsequently, in the mobile phone terminal 1, the update key information K2S is received by the communication I/F 11 (Step S41) and is transmitted from the communication I/F 12 to the battery pack 2 by the authenticating-side transmitting section 142 (Step S42).

Then, in the battery pack 2, the update key information K2S is received by the communication I/F 21 (Step S43) and is decrypted by the same encryption method as the one used in the update key information generating section 528 using the encryption key K1 stored in the authenticated-side encryption key storage 221 by the decrypting section 223 to obtain the new encryption key K2 (Step S44).

Subsequently, the encryption key K2 is stored as a new encryption key in the authenticated-side encryption key storage 221 by the encryption key updating section 224 (Step S45), and notification to the effect that the encryption key rewriting operation has been completed is transmitted from the communication I/F 21 to the mobile phone terminal 1 (Step S46).

Subsequently, if the notification to the effect that the encryption key rewriting operation has been completed in the battery pack 2 is received by the communication I/F 12 in the mobile phone terminal 1 (Step S47), the battery pack 2 is set in a power-saving state by operations similar to those in Steps S20, S21 described above.

On the other hand, in the server device 5, the operations in Steps S31 to S46 and the like are performed at every interval of the set period T1 by operations similar to those in Steps S5, S6, whereby the encryption key of the battery pack 2 is regularly rewritten.

As described above, the encryption key stored in the authenticated-side encryption key storage 221 of the battery pack 2 can be regularly rewritten into a new one by the operations in Steps S31 to S46, S5, S6 and the like. Therefore, it can be made even more difficult for a third party to counterfeit the battery pack 2.

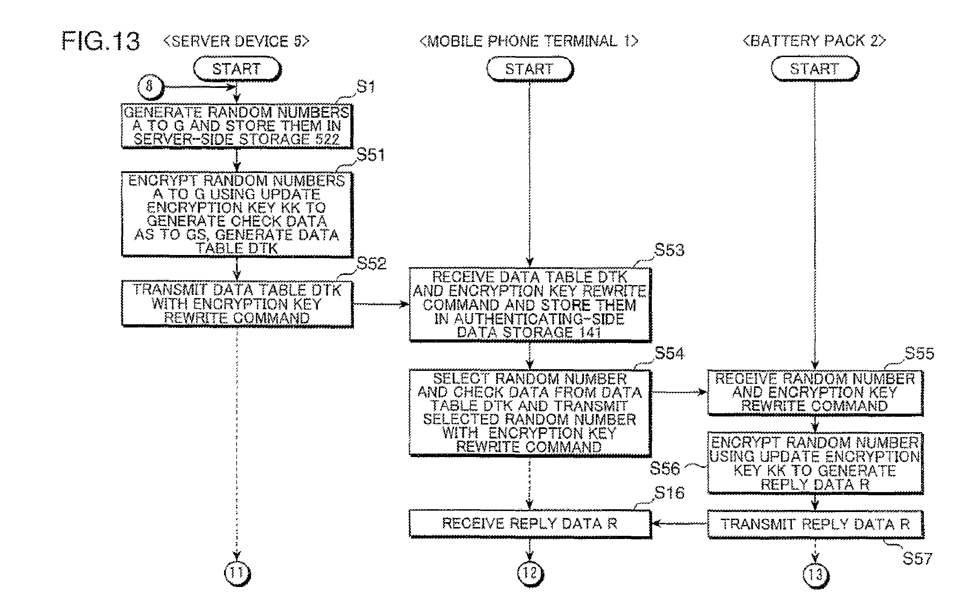

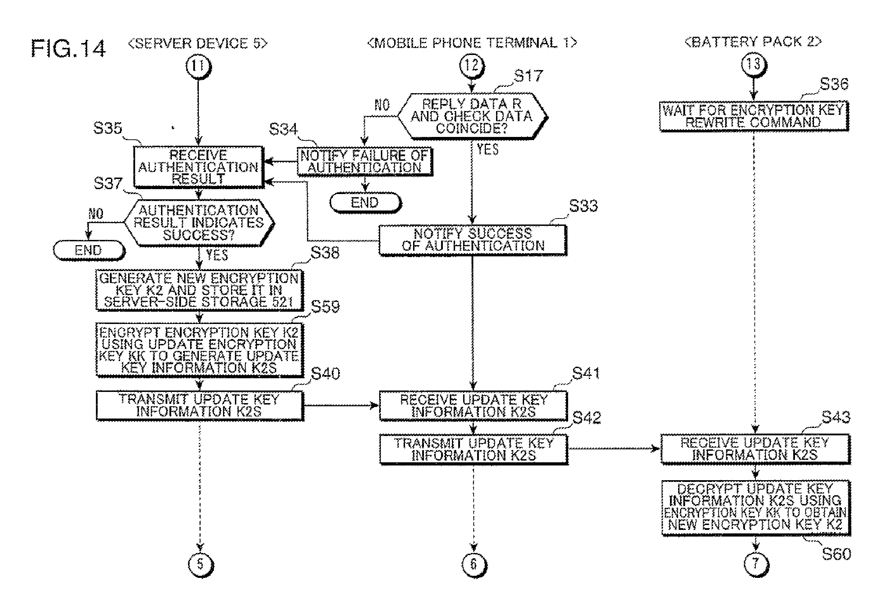

Next, another exemplary operation of rewriting the encryption key stored in the authenticated-side encryption key storage 221 of the battery pack 2 is described. FIGS. 13 and 14 are flow charts showing the other exemplary operation of rewriting the encryption key stored in the authenticated-side encryption key storage 221. In the encryption key rewriting operation shown in FIGS. 13 and 14, an update encryption key KK is stored in the server-side encryption key storage 521 of the server device 5 and the authenticated-side encryption key storage 221 of the battery pack 2 in addition to the encryption key K1.

A plurality of random numbers, e.g. random numbers A to G are generated by the random number generating section 523 in the server device 5 and stored in the server-side storage 522 (Step S1). Further, by the check data generating section 524, the random numbers A to G are encrypted by a specified encryption method, e.g. DES using the update encryption key KK stored in the server-side encryption key storage 521 to generate check data AS to GS and the check data AS to GS are stored in the server-side storage 522 in correspondence with the random numbers A to G, whereby a data table DTK for the encryption key update is generated (Step S51).

Then, by the server-side transmitting section 525, the data table DTK stored in the server-side storage 522 and an encryption key rewrite command are transmitted from the communication I/F 53 to the mobile phone base station 4 via the LAN 531, and are further transmitted as radio signals to the mobile phone terminal 1 by the mobile phone base station 4 (Step S52).

Subsequently, in the mobile phone terminal 1, the data table DTK and the encryption key rewrite command are received by the communication I/F 11 and stored in the authenticating-side data storage 141 (Step S53).

Subsequently, by the authenticating-side transmitting section 142, any one of the random numbers A to G in the data table DTK stored in the authenticating-side data storage 141, e.g. the random number B is selected, and the selected random number B and the encryption key rewrite command are transmitted from the communication I/F 12 to the battery pack 2 via the connection terminal 113 and the electrode 202 (Step S54).

Subsequently, the random number B and the encryption key rewrite command are received by the communication I/F 21 in the battery pack 2 (Step S55). Then, the random number B is encrypted by the same encryption method as the one used in the check data generating section 524 using the update encryption key KK stored in the authenticated-side encryption key storage 221 by the encrypting section 222 to generate reply data R (Step S56), and the replay data R is transmitted from the communication I/F 21 to the mobile phone terminal 1 via the electrode 202 and the connection terminal 113 (Step S57).

Hereinafter, by operations similar to those in Steps S16, S17, S33 to S38 described above, the battery pack 2 is authenticated in the mobile phone terminal 1, the authentication result is confirmed in the server device 5 (Step S37), and a new encryption key K2 is stored in the server-side encryption key storage 521 (Step S38) if the authentication was successful (YES in Step S37).

Then, by the update key information generating section 528, the encryption key K2 is encrypted by the same encryption method as the one used in the check data generating section 524 using the update encryption key KK stored in the server-side encryption key storage 521 to generate update key information K2S (Step S59).

Hereinafter, by operations similar to those in Steps S40 to S43 described above, the update key information K2S is received by the battery pack 2 (Step S43) and decrypted by the same encryption method as the one used in the update key information generating section 528 using the update encryption key KK stored in the authenticated-side encryption key storage 221 by the decrypting section 223 to obtain the new encryption key K2 (Step S60).

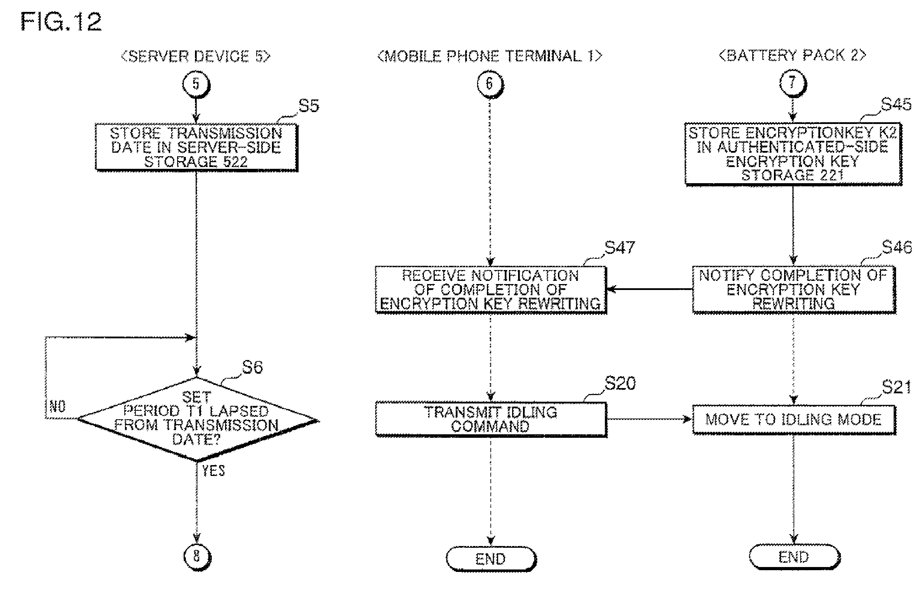

Since the succeeding operations are similar to those in Steps S45 to S47, S20, S21, S5 and S6 shown in FIG. 12, neither disclosure nor description is made thereon.

As described above, by the operations shown in FIGS. 13, 14 and 12, the authentication of the battery pack 2, the encryption and decryption of the new encryption key K2 are made using the update encryption key KK different from the encryption key K1 upon rewriting the encryption key stored in the authenticated-side encryption key storage 221 in the battery pack 2. Thus, it can be made even more difficult to obtain the new encryption key K2 through the analysis of signals transmitted from the server device 5 to the mobile phone terminal 1 and those transmitted from the mobile phone terminal 1 to the battery pack 2 and, hence, to counterfeit the battery pack 2.

In the above example, the server device 5 transmits the update key information K2S in Step S40 after transmitting the encryption key rewrite command to cause the mobile phone terminal 1 to authenticate the battery pack 2 in Steps S31 and S52. However, the server device 5 may transmit the update key information K2S together with the encryption key rewrite command in Steps S31 and S52 and the mobile phone terminal 1 may transmit the update key information K2S received from the server device 5 in Steps S31 and S52 to the battery pack 2 (Step S42) if the authentication was successful in Step S17 (YES in Step S17). In this case, it is not necessary to transmit the authentication result in Step S17 to the server device 5 (Steps S33, S34), wherefore a communication processing load between the mobile phone terminal 1 and the server device 5 can be reduced.

### (Second Embodiment)

Next, an authentication system 3a and a mobile phone terminal 1a according to a second embodiment of the present invention are described. The schematic construction of the authentication system 3a is shown in FIG. 4 similar to the authentication system 3.

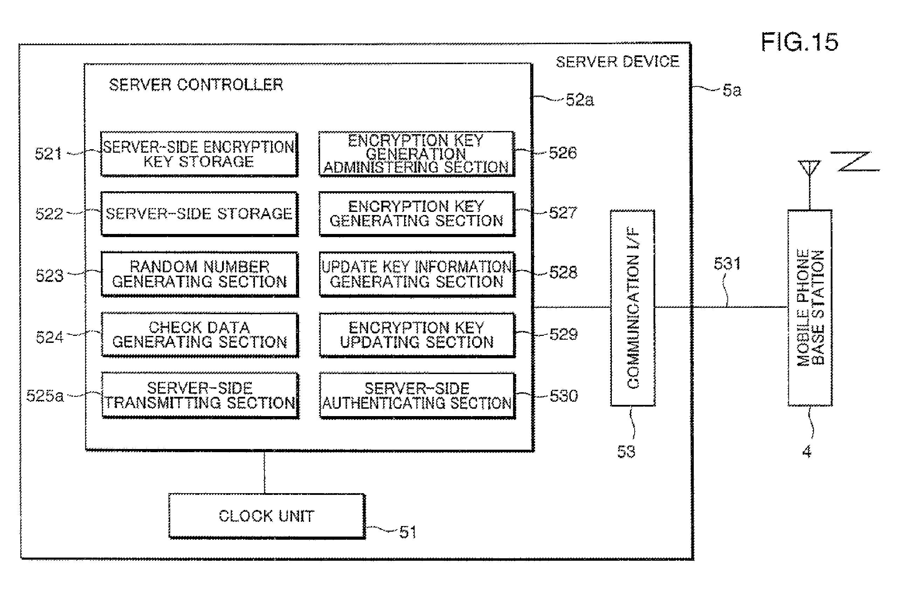

FIG. 15 is a block diagram showing an exemplary electrical construction of a server device 5a used in the authentication system 3a. The server device 5a shown in FIG. 15 and the server device 5 shown in FIG. 5 differ in that the server device 5a further includes a server-side authenticating section 530 in a server controller 52a and a server-side transmitting section 525a performs a different operation.

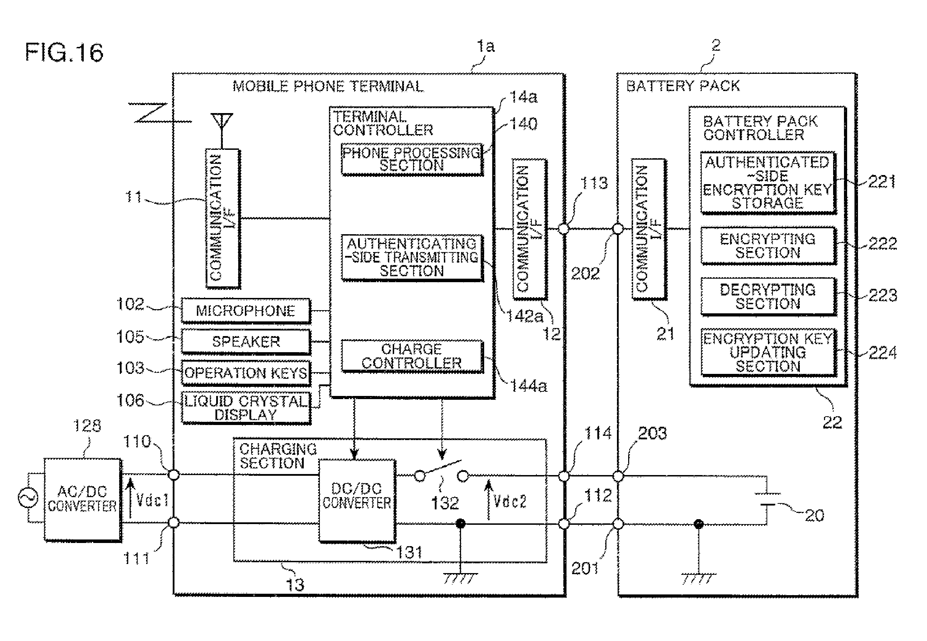

FIG. 16 is a block diagram showing an exemplary electrical construction of the mobile phone terminal 1a used in the authentication system 3a. The mobile phone terminal 1a shown in FIG. 16 and the mobile phone terminal 1 shown in FIG. 6 differ in that a terminal controller 14a includes neither the authenticating-side data storage 141 nor the authenticating section 143 and an authenticating-side transmitting section 142a and a charge controller 144a perform different operations.

The authenticating-side transmitting section 142a in the mobile phone terminal 1a differs from the authenticating-side transmitting section 142 in that replay data R received from the battery pack 2 by the communication I/F 12 is further transmitted to the server device 5a via the mobile phone base station 4 by the communication I/F 11.

The server-side authenticating section 530 in the server device 5a compares the replay data R transmitted from the mobile phone terminal 1a and check data stored in the server-side storage 522 and judges a success of authentication if the two data coincide while judging a failure of authentication unless the two data coincide.

The server-side transmitting section 525a differs from the server-side transmitting section 525 in transmitting the judgment result by the server-side authenticating section 530 from the communication I/F 53 to the mobile phone terminal 1a via the mobile phone base station 4.

The charge controller 144a in the mobile phone terminal 1a differs from the charge controller 144 in controlling the ON- and OFF-states of the switch 132 and the output voltage of the DC/DC converter 131 based on the judgment result by the server-side authenticating section 530 received by the communication I/F 11 from the server device 5a.

Since the other constructions and operations are similar to those of the server device 5 and the mobile phone terminal 1 shown in FIGS. 5 and 6, they are not described in the following description of the operation of this embodiment.

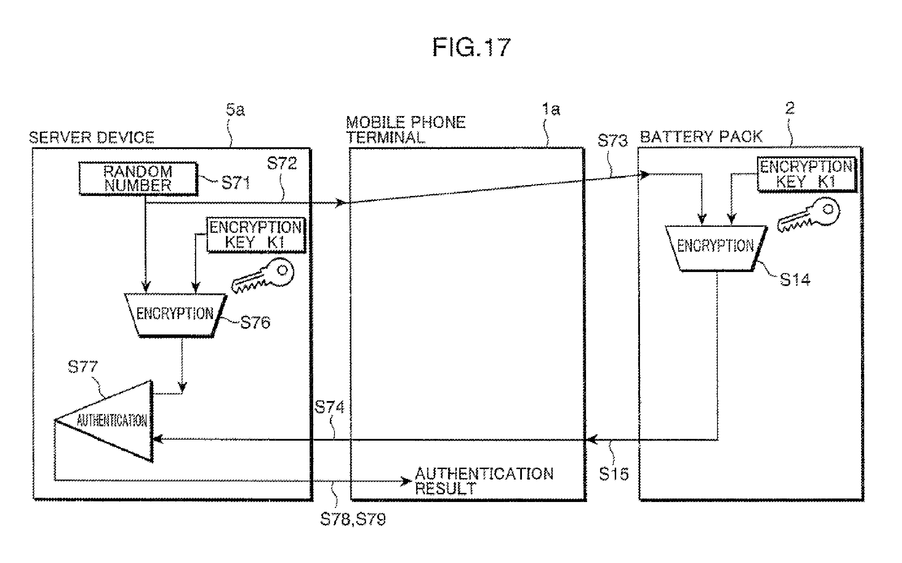

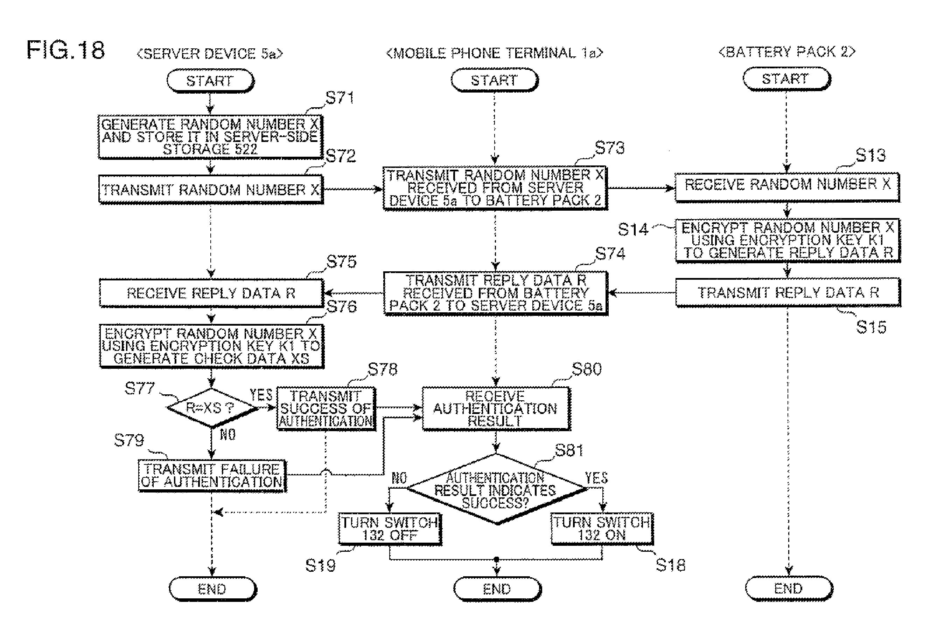

FIG. 17 is a diagram conceptually showing operations of the authentication system 3a, and FIG. 18 is a flow chart showing exemplary operations of the authentication system 3a. First, a random number X is generated by the random number generating section 523 in the server device 5a and stored in the server-side storage 522 (Step S71). This random number X is transmitted from the communication I/F 53 to the mobile phone base station 4 via the LAN 531 by the server-side transmitting section 525a and further transmitted in the form of a radio signal to the mobile phone terminal 1a by the mobile phone base station 4 (Step S72).

Subsequently, if the random number X transmitted in the form of a radio signal from the mobile phone base station 4 is received by the communication I/F 11 in the mobile phone terminal 1a, the random number X received by the communication I/F 11 is transmitted to the battery pack 2 via the connection terminal 113 and the electrode 202 by the authenticating-side transmitting section 142a (Step S73).

Hereinafter, in the battery pack 2, replay data R is generated and transmitted to the mobile phone terminal 1a by operations similar to those in Steps S13 to S15 described above.

Subsequently, if the replay data R transmitted from the battery pack 2 is received by the communication I/F 12 in the mobile phone terminal 1a, the replay data R received by the communication I/F 12 is transmitted from the communication I/F 11 to the server device 5a via the mobile phone base station 4 by the authenticating-side transmitting section 142a (Step S74).

Subsequently, in the server device 5a, the replay data R transmitted from the mobile phone terminal 1a is received by the communication I/F 53 (Step S75). Then, by the check data generating section 524, the random number X stored in the server-side storage 522 is encrypted by a specified encryption method, e.g. DES using an encryption key K1 stored in the server-side encryption key storage 521 to generate check data XS (Step S76). This check data XS and the replay data R received by the communication I/F 53 are compared by the server-side authenticating section 530 (Step S77), information indicating an authentication result to the effect that the authentication was successful is transmitted from the communication I/F 53 to the mobile phone terminal 1a via the mobile phone base station 4 by the server-side transmitting section 525a (Step S78) if the two data coincide (YES in Step S77), whereas information indicating an authentication result to the effect that the authentication was unsuccessful is transmitted from the communication I/F 53 to the mobile phone terminal 1a via the mobile phone base station 4 by the server-side transmitting section 525a (Step S79) unless the two data coincide (NO in Step S77).

Subsequently, in the mobile phone terminal 1a, the information indicating the authentication result in the server-side authenticating section 530 is received by the communication I/F 11 (Step S80). Then, the authentication result received by the communication I/F 11 is confirmed by the charge controller 144a (Step S81), and the switch 132 is turned on (closed) (Step S18) if the authentication result indicates the success (YES in Step S81), whereby the direct-current voltage Vdc2 outputted from the DC/DC converter 131 is applied to the secondary battery 20 via the switch 132, the connection terminal 114 and the electrode 203 to charge the secondary battery 20.

On the other hand, if the authentication result indicates the failure (NO in Step S81), the switch 132 is turned off (opened) by the charge controller 144a and the secondary battery 20 is not charged (Step S19).

In this way, it can be prevented to charge the battery pack 2 that is counterfeited and has a very poor quality. Further, since the mobile phone terminal 1a only relays the random number X and the replay data R between the server device 5a and the battery pack 2 and authentication is made in the server device 5a, the mobile phone terminal 1a not only needs none of a random number generation circuit for generating random numbers, an encryption circuit for encrypting the random numbers, a decryption circuit for decrypting the reply data R, etc., but also needs neither of the authenticating-side data storage 141 and the authenticating section 143. Therefore, the circuitry in the mobile phone terminal 1a can be simplified.

Further, since the mobile phone terminal 1 includes neither the encryption circuit for encrypting the random numbers nor the decryption circuit for decrypting the reply data R and stores neither the encryption key K1 nor the check data XS, even if the mobile phone terminal 1a is disassembled by a third party, it is difficult to analyze the encryption method, the encryption key and the check data used for the authentication of the battery pack 2. Therefore, the mobile phone terminal 1a can make it even more difficult to counterfeit the battery pack 2 by improving the tamper proofness.

In Steps S81, S18 and S19, the charge controller 144a may start the charging of the secondary battery 20 by turning the switch 132 on regardless of the authentication result, and may set the direct-current voltage Vdc2 outputted from the DC/DC converter 131 to a charge voltage optimized for the legitimate secondary battery 20, e.g. 4.2 V if the authentication was successful (YES in Step S81) while setting the direct-current voltage Vdc2 outputted from the DC/DC converter 131 to a voltage lower than the charge voltage optimized for the legitimate secondary battery 20, e.g. 4.0 V if the authentication was unsuccessful (NO in Step S81).

In this case, the legitimate secondary battery 20 is charged with the optimized charge voltage, thereby making it possible to shorten a charging time and increase a cycle life, whereas the charge voltage is reduced for the illegitimate secondary battery 20, thereby making it possible to reduce a possibility of deteriorating the quality.

Although the device to be authenticated is the mobile phone terminal 1, 1a including the charging section 13 for charging the battery pack 2 in the above examples, the authentication device is not limited to the mobile phone terminal and is applicable to various electric devices using battery packs such as portable personal computers, video cameras, portable gaming systems, digital cameras, portable MD (Mini Disc) players, portable CD (Compact Disc) players, portable cassette tape players, electric tools, vacuum cleaners, electric shavers, electric cars or to vehicle-mounted devices enabling the use of these devices in vehicles.

The authentication device may also be, for example, a charging device including none of the microphone 102, the operation keys 103, the speaker 105, the liquid crystal display 106 and the phone processing section 140 in the mobile phone terminal 1, 1a.

The device to be authenticated is not limited to the battery pack 2 and may be, for example, something other than the battery pack and including circuits equivalent to the communication I/F 21 and the battery pack controller 22 such as a memory module used in a gaming system, a personal computers or the like.

The communication I/F 11 is not limited to the one for conducting radio communications, and may be a communication interface circuit for conducting wired communications with the server device 5, 5a, for example, via Internet or telephone line, e.g. a communication interface circuit for power line carrier communication for conducting a communication with the server device 5, 5a by superimposing a communication signal with a commercial alternating current power supply voltage via a power line for supplying the commercial alternating current power supply voltage to the device to be authenticated.

The communication I/F 11 may also be a communication interface using near field communication means such as a wireless LAN, Bluetooth or infrared communication or noncontact communication means such as noncontact card reader/writer for transmitting and receiving signals by electromagnetic induction, and may be able to communicate with the server device 5, 5a via a relay device constructed to be able to communicate with the communication I/F 11 by near field radio communication and to communicate with the server device 5, 5a by communication means such as Internet, power line carrier communication, telephone line or mobile phone line.

### (Third Embodiment)

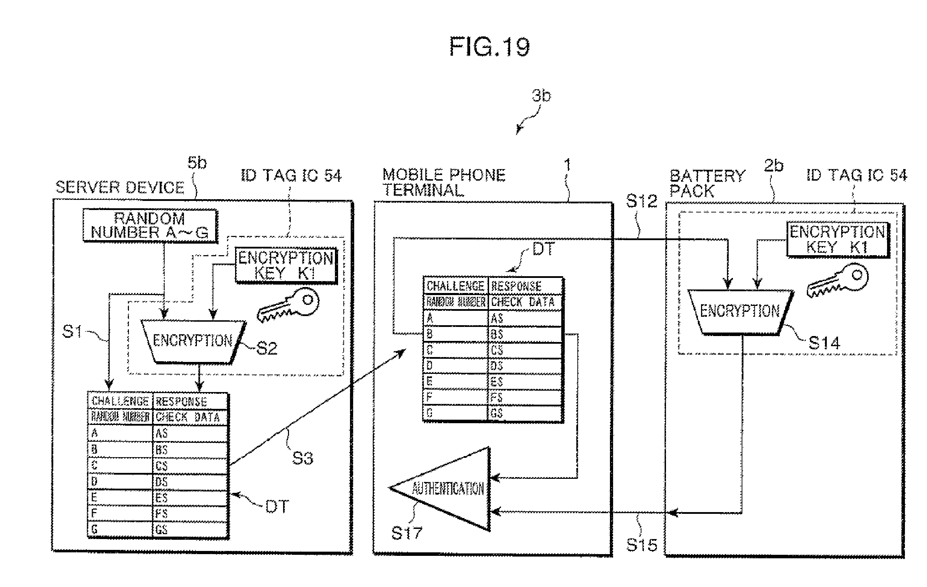

Next, an authentication system 3b according to a third embodiment of the present invention is described. The schematic construction of the authentication system 3b is shown in FIG. 4 similar to the authentication system 3. FIG. 19 is a conceptual diagram showing an exemplary electrical construction of the authentication system 3b according to the third embodiment of the present invention. The authentication system 3b shown in FIG. 19 includes a server device 5b, a mobile phone terminal 1 and a battery pack 2b.

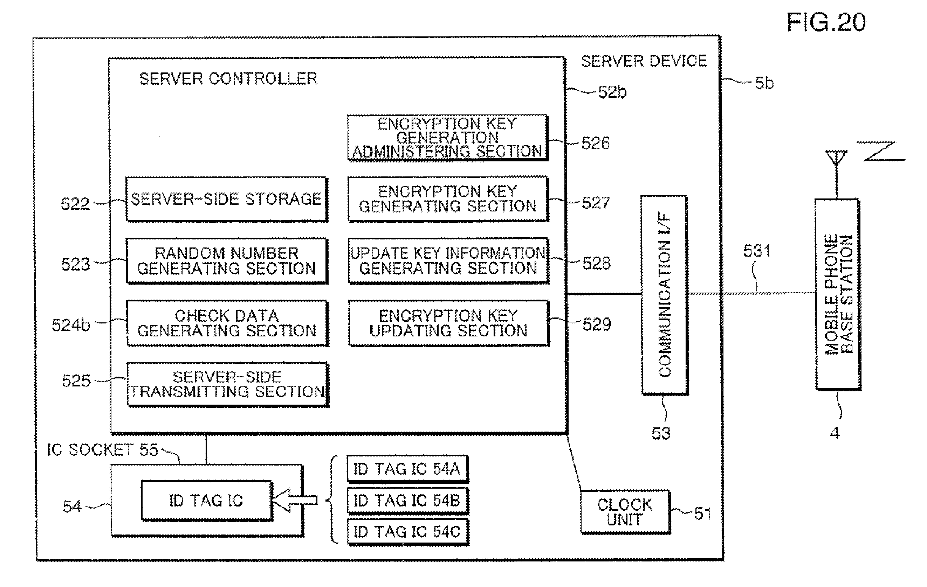

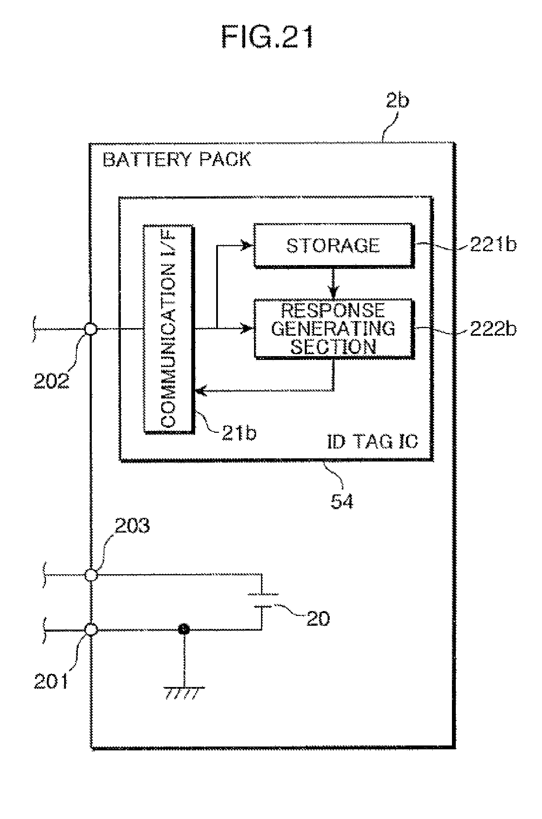

FIG. 20 is a block diagram showing an exemplary construction of the server device 5b. The server device 5b shown in FIG. 20 differs from the server device 5 shown in FIG. 5 in further including an ID tag (identification tag) IC (integrated circuit) 54 (second integrated circuit) and an IC socket 55 (connecting portion), including no server-side encryption key storage 521 and including a check data generating section 524b instead of the check data generating section 524. FIG. 21 is a block diagram showing exemplary constructions of the battery pack 2b and the ID tag IC 54. The battery pack 2b shown in FIG. 21 differs from the battery pack 2 shown in FIG. 6 in including an ID tag IC 54 (first integrated circuit) instead of the communication I/F 21 and the battery pack controller 22.

Although not shown in FIG. 21, the battery pack 2b may, for example, include a control circuit constructed by a microcomputer or the like accessible to, for example, the ID tag IC 54, and may cause the control circuit to function as the encrypting section 223 and the encryption key updating section 224 by implementing a specified control program.

Since the other constructions are similar to those of the authentication system 3 shown in FIG. 4, only characteristic points of this embodiment are described below.

The ID tag IC 54 is an integrated circuit for ID tags used, for example, in logistics, and various integrated circuits distributed in the marketplace as general-purpose goods such as DS2704 manufactured by Maxim Integrated Products, Inc. in the U.S., BQ26150 and BQ26100 manufactured by Texas Instruments Inc. in the U.S., MISTY mounted chips manufactured by Renesas Technology Corp. , CIPHERUNICORN-S mounted chips manufactured by NEC Corporation can be used. The ID tag IC 54 includes a storage 221b that is a nonvolatile storage device such as an EEPROM or a FeRAM for storing, for example, a specified encryption key, an interface circuit such as a communication I/F 21b (receiving section, transmitting section) for conducting, for example, asynchronous or synchronous serial communications, and an encryption data generating section 222b for generating encryption data by encrypting a password externally received by the communication I/F 21b by the same encryption method as the one used in the check data generating section 524b using an encryption key stored in the storage 221b.

The battery pack 2b operates in the same manner as the battery pack 2 shown in FIG. 6 by using the storage 221b as the authenticated-side encryption key storage 221, the communication I/F 21b as the communication I/F 21 and the encryption data generating section 22b as the encrypting section 222.

In the battery pack 2 shown in FIG. 6, the battery pack controller 22 is constructed, for example, using the CPU, ROM, FeRAM and EEPROM, RAM and their peripheral circuits as described above, and the cost of the battery pack controller 22 is high due to the parts cost. Further, the control program for operating the CPU needs to be developed, which is the cause of a development cost increase of the battery pack controller 22.

In light of improving the tamper proofness, it is desirable to construct the battery pack controller 22 into an integrated circuit. However, if the battery pack 22 is constructed by an ASIC (Application Specific Integrated Circuit), the development cost of the ASIC is higher than in the case where the battery pack controller 22 is constructed by the individual parts as described above. Further, since ASICs are exclusive articles, the number of products is limited and the unit parts cost tends to increase as compared to general-purpose integrated circuits.

However, an integrated circuit such as the battery pack controller 22 designed to confirm whether or not the battery pack is a legitimate one is not distributed in the marketplace as a general-purpose goods. Thus, it has been conventionally forced to construct the battery pack controller 22 using individual parts or an ASIC as described above.

Accordingly, the battery pack 2b shown in FIG. 21 uses the ID tag IC 54, which is distributed in large quantity in the marketplace as general-purpose goods and, hence, available at a cheap price, as the authenticated-side encryption key storage 221, the communication I/F 21 and the encrypting section 222 to reduce the cost of the battery pack 2b, paying attention to the fact that some of integrated circuits for so-called ID tags used in logistics and the like have an encryption function. Further, the development cost can be reduced since the control program for the battery pack controller 22 needs not be developed.

Next, characteristic points of the server device 5b shown in FIG. 20 are described. The IC socket 55 is the one constructed to make the ID tag IC 54 provided in the battery pack 2b detachable. The IC socket 55 is connected to a server controller 52b. The check data generating section 524b is accessible, via the IC socket 55, to the ID tag IC 54 attached to the IC socket 55.

The check data generating section 524b uses a storage of the ID tag IC 54 as the server-side encryption key storage 521, transmits random numbers A to G (authentication data) to the communication I/F 21b of the ID tag IC 54, thereby causing the ID tag IC 54 to generate encryption data, and receives the encryption data transmitted from the communication I/F 21b as check data AS to GS, thereby generating the check data As to GS. In this way, the server device 5b operates similar to the server device 5 shown in FIG. 5.

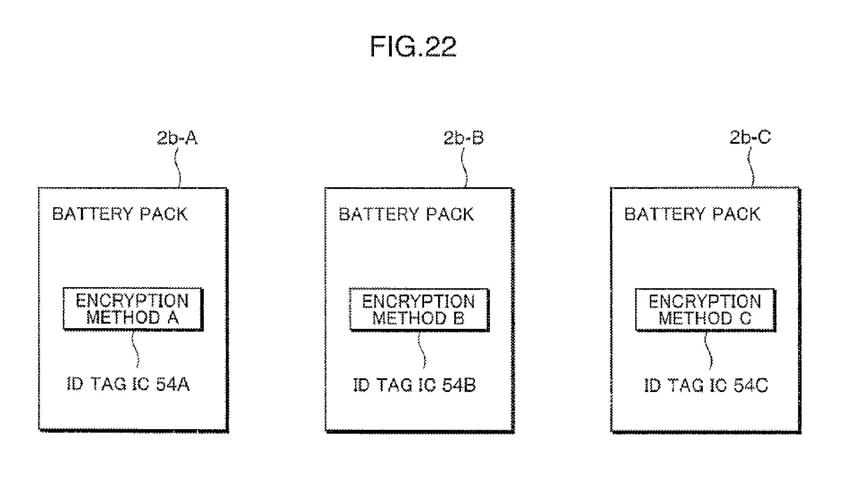

Various battery packs are distributed in the marketplace, and there are cases where the server device 5b has to authenticate different types of battery packs and battery packs of different manufacturers. For example, in the case of authenticating a plurality of battery packs using mutually different encryption methods, e.g. a battery pack 2b-A including an ID tag IC 54A using an encryption method A, a battery pack 2b-B including an ID tag IC 54B using an encryption method B and a battery pack 2b-C including an ID tag IC 54C using an encryption method C as shown in FIG. 22, the battery packs 2b using various encryption methods can be easily authenticated, for example, by attaching the ID tag IC 54A to the IC socket 55 for the authentication of the battery pack 2b-A, attaching the ID tag IC 54B to the IC socket 55 for the authentication of the battery pack 2b-B and attaching the ID tag IC 54C to the IC socket 55 for the authentication of the battery pack 2b-C, since the ID tag IC 54 is made detachable by the IC socket 55 in the server device 5b.

Thus, the server device 5b can deal with various encryption methods by exchanging the ID tag ICs 54, wherefore a program needs not be changed to change the encryption method, for example, as in the case of the server device 5 shown in FIG. 5 and the development cost to change the encryption method can be reduced.

The number of the IC socket 55 is not limited to one, and a plurality of IC sockets 55 corresponding to the pin arrangements, shapes and electrical specifications of a plurality of types of ID tag ICs to be used may be provided. The server device 5b needs not necessarily include the IC socket 55, and it is sufficient for the server device 5b to include the same ID tag IC 54 as that of the battery pack 2b. Further, the authentication system 3b needs not necessarily include the server device 5b, and may cause the check data generating section 524 to set the same encryption method as that of the ID tag IC 54 using the server device 5 instead of the server device 5b.

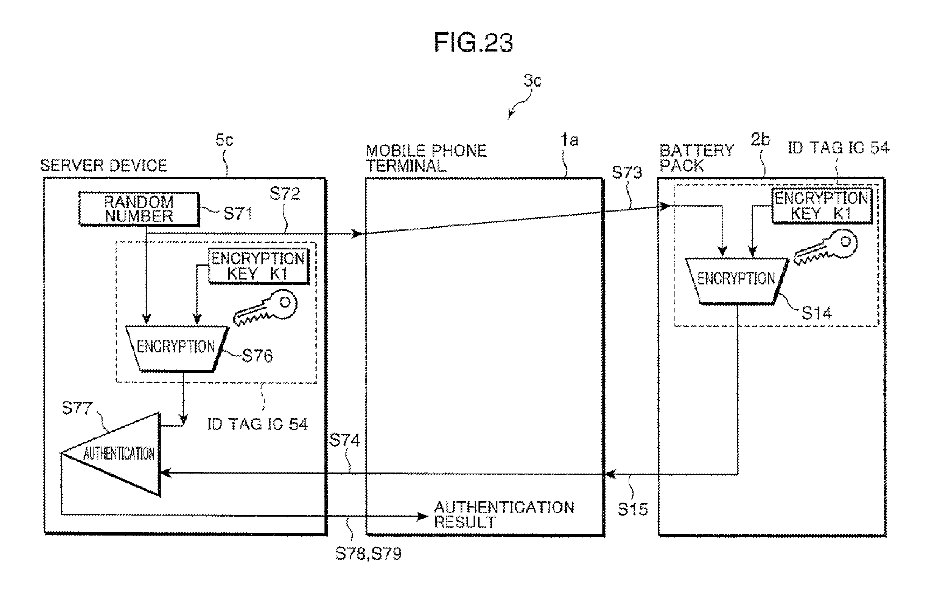

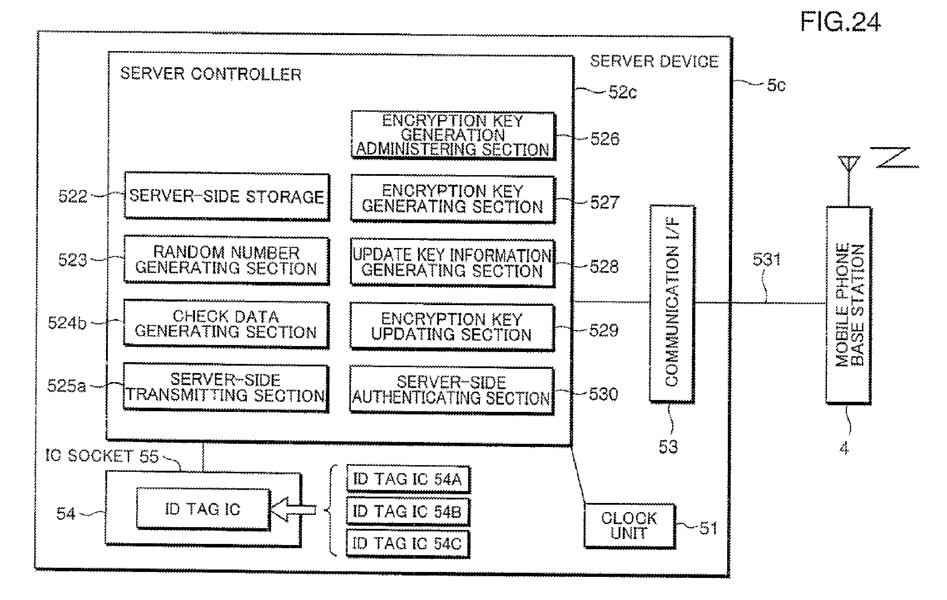

The authentication system may include a server device 5c, the mobile phone terminal 1a and the battery pack 2b, for example, as in an authentication system 3c shown in FIG. 23. FIG. 24 is a block diagram showing an exemplary construction of the server device 5c. The server device 5c shown in FIG. 24 differs from the server device 5a shown in FIG. 15 in further including an ID tag IC 54 (second integrated circuit) and an IC socket 55 (connecting portion), including no server-side encryption key storage 521 and including a check data generating section 524b instead of the check data generating section 524. Since the other constructions are similar to those of the authentication system 3a shown in FIG. 4, they are not described.

The authentication system 3c constructed as above operates similar to the authentication system 3a shown in FIG. 4, and can reduce the cost of the battery pack 2b by using the ID tag IC 54, which is distributed in large quantity in the marketplace as general-purpose goods and, hence, available at a cheap price as described above, as the authenticated-side encryption key storage 221, the communication I/F 21 and the encrypting section 222 since the battery pack 2b shown in FIG. 21 is used. Further, development cost can be reduced since the control program for the battery pack controller 22 needs not be developed. Further, since the server device 5c can deal with various encryption methods by exchanging the ID tag ICs 54 similar to the authentication system 3b shown in FIG. 20, a program needs not be changed to change the encryption method, for example, as in the case of the server device 5a shown in FIG. 15 and the development cost to change the encryption method can be reduced.

An authentication system according to one aspect of the present invention comprises a device to be authenticated; an authentication device for authenticating the device to be authenticated; and a server device connected with the authentication device via a network, wherein the server device includes a server-side encryption key storage for storing an encryption key for the authentication beforehand, a check data generating section for generating check data by encrypting specified authentication data used for the authentication by a preset encryption method using the encryption key stored in the server-side encryption key storage, a server-side communicating section for communicating with the authentication device via the network and a server-side transmitting section for causing the server-side communicating section to transmit the authentication data to the authentication device; the authentication device includes a first authenticating-side communicating section for communicating with the server device via the network, a second authenticating-side communicating section for communicating with the device to be authenticated and an authenticating-side transmitting section for causing the second authenticating-side communicating section to transmit the authentication data received by the first authenticating-side communicating section to the device to be authenticated; the device to be authenticated includes an authenticated-side encryption key storage for storing the encryption key beforehand, an authenticated-side communicating section for communicating with the authentication device, and an encrypting section for, if the authentication data is received from the second authenticating-side communicating section by the authenticated-side communicating section, encrypting the received authentication data by the encryption method using the encryption key stored in the authenticated-side encryption key storage; and the authenticated-side communicating section transmits the data encrypted by the encrypting section as reply data to the second authenticating-side communicating section; and the authentication device further includes an authenticating section for authenticating the device to be authenticated based on the reply data received by the second authenticating-side communicating section and the check data generated by the check data generating section.

According to this construction, in the server device, the specified authentication data is encrypted by the preset encryption method using the encryption key stored in the server-side encryption key storage beforehand to generate the check data. The authentication data is also transmitted to the authentication device by the server device, and is further transmitted to the device to be authenticated by the authentication device. The authentication data is received by the device to be authenticated. In the device to be authenticated, this authentication data received by the device to be authenticated is encrypted by the preset encryption method using the encryption key stored in the authenticated-side encryption key storage beforehand to generate the reply data. This reply data is transmitted from the device to be authenticated to the authentication device. In the authentication device, the authentication of the device to be authenticated is made based on the reply data transmitted from the device to be authenticated and the check data generated by the check data generating section.

In this case, the authentication data used for the authentication and the check data obtained by encrypting this authentication data are generated by the server device. The authentication device can transmit the authentication data transmitted from the server device to the device to be authenticated and can authenticate the device to be authenticated based on the reply data returned from the device to be authenticated and the check data generated by the check data generating section. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

It is preferable that the server-side transmitting section causes the server-side communicating section to transmit the check data generated by the check data generating section to the first authenticating-side communicating section; the authentication device further includes an authenticating-side data storage for storing the authentication data received from the server-side communicating section by the first authenticating-side communicating section and the check data in correspondence; and the authenticating section compares the reply data received by the second authenticating-side communicating section and the check data stored in correspondence with the authentication data in the authenticating-side storage and judges a success of authentication if the two data coincide while judging a failure of authentication unless the two data coincide.

According to this construction, in the server device, the specified authentication data is encrypted by the preset encryption method using the encryption key stored in the server-side encryption key storage beforehand to generate the check data. The authentication data and the check data are transmitted to the authentication device by the server device. The authentication data transmitted from the server device and the check data are stored in correspondence in the authenticating-side data storage of the authentication device, and the authentication data is transmitted to the device to be authenticated by the authentication device. The authentication data is received by the device to be authenticated. In the device to be authenticated, this authentication data received by the device to be authenticated is encrypted by the preset encryption method using the encryption key stored in the authenticated-side encryption key storage beforehand to generate the reply data. This reply data is transmitted from the device to be authenticated to the authentication device. In the authentication device, the check data stored in correspondence with this authentication data in the authenticating-side data storage and the reply data transmitted from the device to be authenticated are compared, and the authentication of the device to be authenticated is made by judging the success of authentication if the two data coincide while judging the failure of authentication unless the two data coincide.

In this case, the authentication data used for the authentication and the check data obtained by encrypting this authentication data are generated by the server device. The authentication device can transmit the authentication data transmitted from the server device to the device to be authenticated and authenticate the device to be authenticated by comparing the reply data returned from the device to be authenticated and the check data transmitted from the server device. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

The check data generating section encrypts a plurality of authentication data by the encryption method using encryption keys respectively stored in the server-side encryption key storage to generate a plurality of check data; the server-side transmitting section causes the server-side communicating section to transmit the plurality of authentication data and the plurality of check data generated by the check data generating section to the first authenticating-side communicating section via the network; the authenticating-side data storage stores the plurality of authentication data and the plurality of check data received by the first authenticating-side communicating section; and the authenticating-side transmitting section causes the second authenticating-side communicating section to transmit any one of the plurality of authentication data stored in the authenticating-side storage to the authenticated-side communicating section.

According to this construction, in the server device, the plurality of authentication data are generated and the plurality of check data are generated based on these plurality of authentication data. The plurality of authentication data and the plurality of check data are transmitted to the authentication device by the server device. By the authentication device, the plurality of authentication data and the plurality of check data are stored and any one of the plurality of check data is transmitted to the device to be authenticated. In this case, since any one of the plurality of authentication data is transmitted to the device to be authenticated, the authentication data to be transmitted from the authentication device to the device to be authenticated can be changed, wherefore it can be made more difficult to analyze an authentication method and, hence, to counterfeit the device to be authenticated.

An authentication data generating section for regularly generating the authentication data is further provided; the check data generating section generates the check data based on the authentication data regularly generated by the authentication data generating section; and the server-side transmitting section causes the server-side communicating section to transmit the regularly generated authentication data and the check data generated based on the authentication data to the first authenticating-side communicating section via the network.

According to this construction, by the server device, the authentication data is regularly generated by the authentication data generating section, the check data is regularly generated based on the authentication data and the authentication data and the check data are regularly transmitted to the authentication device. These authentication data and check data are used for the authentication of the device to be authenticated by the authentication device. In this way, the authentication data to be transmitted from the authentication device to the device to be authenticated and an expected value of the reply data to be transmitted from the device to be authenticated and the authentication device can be regularly changed, wherefore it can be made more difficult to analyze an authentication method and, hence, to counterfeit the device to be authenticated.

The authenticating-side transmitting section may cause the first authenticating-side communicating section to transmit the reply data received by the second authenticating-side communicating section to the server-side communicating section; the server device may further include a server-side authenticating section for comparing the check data generated by the check data generating section and the reply data received by the server-side communicating section and judging a success of authentication if the two data coincide while judging a failure of authentication unless the two data coincide; the server-side transmitting section causes the server-side communicating section to transmit a judgment result by the server-side authenticating section to the first authenticating-side communicating section; and the authenticating section authenticates the device to be authenticated based on the judgment result received by the first authenticating-side communicating section.

According to this construction, the specified authentication data is transmitted from the server device to the authentication device and further transmitted from the authentication device to the device to be authenticated. In the device to be authenticated, this authentication data is received and encrypted by the preset encryption method using the encryption key stored in the authenticated-side encryption key storage beforehand to generate the reply data. This reply data is transmitted to the authentication device by the device to be authenticated and further transmitted from the authentication device to the server device. In the server device, the authentication data is encrypted by the preset encryption method using the encryption key stored in the server-side encryption key storage beforehand to generate the check data. By the server device, this check data and the reply data transmitted from the authentication device are compared and the success of authentication is judged if the two data coincide while the failure of authentication is judged unless the two data coincide. This judgment result is transmitted to the authentication device by the server device, and the authentication of the device to be authenticated is confirmed based on the judgment result in the authentication device.

In this case, the authentication data is transmitted from the server device to the device to be authenticated via the authentication device. Further, the reply data returned to the authentication device by the device to be authenticated is transmitted to the server device by the authentication device. In the server device, the authentication is judged based on the check data obtained by encrypting the authentication data and the reply data returned from the device to be authenticated, and this judgment result is transmitted to the authentication device. In the authentication device, the authentication of the device to be authenticated is confirmed based on this judgment result. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

The server device further includes an encryption key generating section for generating a new encryption key, an update key information generating section for generating update key information by encrypting the generated new encryption key by the encryption method using the encryption key stored in the server-side encryption key storage if the new encryption key is generated by the encryption key generating section, and an encryption key updating section for storing the generated new encryption key in the server-side encryption key storage if the new encryption key is generated by the encryption key generating section; the server-side transmitting section causes the server-side communicating section to transmit the update key information generated by the update key information generating section to the first authenticating-side communicating section; the authenticating-side transmitting section causes the second authenticating-side communicating section to transmit the received update key information to the authenticated-side communicating section if the update key information is received by the first authenticating-side communicating section; and the device to be authenticated further includes a decrypting section for decrypting the received update key information using the encryption key stored in the authenticated-side encryption key storage if the update key information is received by the authenticated-side communicating section and an encryption key updating section for storing the encryption key decrypted by the decrypting section as a new encryption key in the authenticated-side encryption key storage.

According to this construction, a new encryption key is generated in the server device and update key information is generated by encrypting this new encryption key by the preset encryption method using the encryption key stored in the server-side encryption key storage. By storing this new encryption key in the server-side encryption key storage, the encryption key in the server device is updated. This update key information is transmitted to the device to be authenticated via the authentication device, and decrypted using the encryption key stored in the authenticated-side encryption key storage to obtain the new encryption key in the device to be authenticated. By storing this new encryption key in the authenticated-side encryption key storage, the encryption key in the device to be authenticated is updated. Since the encryption key used for the authentication of the device to be authenticated can be updated in this way, it can be made more difficult to analyze an encryption method and, hence, to counterfeit the device to be authenticated.

The server-side encryption key storage further stores an update encryption key for encrypting a new encryption key; the server device further includes an encryption key generating section for generating a new encryption key, an update key information generating section for generating update key information by encrypting the generated new encryption key by the encryption method using the update encryption key stored in the server-side encryption key storage if the new encryption key is generated by the encryption key generating section and an encryption key updating section for storing the generated new encryption key in the server-side encryption key storage if the new encryption key is generated by the encryption key generating section; the server-side transmitting section causes the server-side communicating section to transmit the update key information generated by the update key information generating section to the first authenticating-side communicating section; the authenticating-side transmitting section causes the second authenticating-side communicating section to transmit the received update key information to the authenticated-side communicating section if the update key information is received by the first authenticating-side communicating section; the authenticated-side encryption key further stores the update encryption key beforehand; and the device to be authenticated further includes a decrypting section for decrypting the received update key information using the update encryption key stored in the authenticated-side encryption key storage if the update key information is received by the authenticated-side communicating section and an encryption key updating section for storing the encryption key decrypted by the decrypting section as a new encryption key in the authenticated-side encryption key storage.

According to this construction, a new encryption key is generated in the server device and update key information is generated by encrypting this new encryption key by the preset encryption method using the update encryption key stored in the server-side encryption key storage. By storing this new encryption key in the server-side encryption key storage, the encryption key in the server device is updated. This update key information is transmitted to the device to be authenticated via the authentication device, and decrypted using the update encryption key stored in the authenticated-side encryption key storage to obtain the new encryption key in the device to be authenticated. By storing this new encryption key in the authenticated-side encryption key storage, the encryption key in the device to be authenticated is updated. Since the encryption key used for the authentication can be updated using the update encryption key different from the encryption key used for the authentication of the device to be authenticated in this way, it can be made more difficult to analyze the update encryption key and, hence, for a third party to tamper the encryption key.

The server device further includes an encryption key generation administrating section for causing the encryption key generating section to generate the new encryption key regularly or as scheduled.

According to this construction, since the encryption key used for the authentication of the device to be authenticated is changed regularly or as scheduled, it can be made more difficult to analyze the encryption key and, hence, to counterfeit the device to be authenticated.

The schedule for generating the encryption key is programmed utilizing a calendar timer, the number of accesses for authentication or a cumulative operating time of the device.

According to this construction, the schedule for generating the encryption key is based on the calendar timer, the number of accesses for authentication or the cumulative operating time of the device and the encryption key used for the authentication of the device to be authenticated can be updated as scheduled, it can be made more difficult to analyze the encryption key and, hence, to counterfeit the device to be authenticated.

The authentication device is a charging device including a connection terminal connectable with a secondary battery, a charging section for charging the secondary battery connected with the connection terminal and a charge controller for controlling the operation of the charging section in accordance with the judgment result of the authenticating section, and the device to be authenticated is a battery pack further including the secondary battery.

According to this construction, since it is possible to authenticate the secondary battery and control the operation of the charging section in accordance with the judgment result on the authentication in the charging device for charging the secondary battery, the charging operation can be controlled based on whether or not the secondary battery connected with the connection terminal is a legitimate secondary battery.

The charge controller prohibits the charging of the secondary battery by the charging section if the failure of authentication was judged by the authenticating section.

According to this construction, since the charging of the secondary battery by the charging section is prohibited if the failure of authentication was judged by the authenticating section, the charging of an illegitimate secondary battery can be suppressed.

The charge controller sets a voltage to be supplied by the charging section to charge the secondary battery lower than a voltage supplied to charge the secondary battery by the charging section in the case of judging the success of authentication by the authenticating section if the failure of authentication was judged by the authenticating section.

According to this construction, since the secondary battery is charged with the voltage lower than the one supplied in the case of judging the success of authentication by the authenticating section if the failure of authentication was judged by the authenticating section, a possibility of deteriorating the secondary battery can be reduced by lowering a charge voltage to the secondary battery that is illegitimate and, hence, possibly has a poor quality.

The authentication device is a mobile phone terminal further including a phone processing section for conducting radio communication by power supplied from the secondary battery, and the network is a mobile phone line.

According to this construction, the authentication of the secondary battery for supplying the power to operate the mobile phone terminal can be authenticated by the mobile phone terminal and the first authenticating-side communicating section can communicate with the server device via the mobile phone line.

An authentication device according to one aspect of the present invention is an authentication device connected with a server device via a network for authenticating a device to be authenticated and comprises a first authenticating-side communicating section for communicating with the server device via the network; a second authenticating-side communicating section for communicating with the device to be authenticated; an authenticating-side transmitting section for, if specified authentication data transmitted from the server device is received by the first authenticating-side communicating section, causing the second authenticating-side communicating section to transmit the received authentication data to the device to be authenticated; and an authenticating section for, if reply data obtained by encrypting the authentication data using the encryption method and encryption key in the device to be authenticated is received by the second authenticating side communicating section, authenticating the device to be authenticated based on check data obtained by encrypting the authentication data using preset encryption method and encryption key and the reply data received by the second authenticating-side communicating section.

According to this construction, if the authentication data transmitted from the server device is received by the first authenticating-side communicating section, the received authentication data is transmitted to the device to be authenticated by the second authenticating-side communicating section. The reply data obtained by encrypting the authentication data using the encryption method and encryption key is transmitted from the device to be authenticated, and the authentication of the device to be authenticated is made by the authentication device based on the received reply data and the check data obtained by encrypting the authentication data using the preset encryption method and encryption key if the reply data is received by the second authenticating-side communicating section.

In this case, the authentication data used for authentication is transmitted from the server device and received by the authentication device. Further, this authentication data is transmitted to the device to be authenticated by the authentication device. By the authentication device, the authentication of the device to be authenticated is made based on the reply data returned by the device to be authenticated and the check data obtained by encrypting the authentication data using the preset encryption method and encryption key. Accordingly, the authentication device needs not include a circuit for generating authentication data and encryption and decryption circuits for encrypting and decrypting the authentication data, and can authenticate the device to be authenticated while a circuit scale increase in the authentication device is suppressed.

The check data is transmitted from the server device; an authenticating-side data storage for storing the received check data if the check data transmitted from the server device is received by the first authenticating-side communicating section is further provided; and the authenticating section compares the received reply data and the check data stored in the authenticating-side storage if the reply data is received by the second authenticating-side communicating section and judges a success of authentication if the two data coincide while judging a failure of authentication unless the two data coincide.

According to this construction, if the authentication data transmitted from the server device and the check data obtained by encrypting the authentication data using the preset encryption method and encryption key are received by the first authenticating-side communicating section, the received authentication data and check data are stored in correspondence in the authenticating-side data storage. Further, the received authentication data is transmitted to the device to be authenticated by the second authenticating-side communicating section. If the reply data obtained by encrypting the authentication data by the encryption method and the encryption key is transmitted from the device to be authenticated and received by the second authenticating-side communicating section, the received reply data and the check data stored in the authenticating-side storage are compared by the authentication device. Further, as a result of this comparison, the authentication device judges the success of authentication if the two data coincide while judging the failure of authentication unless the two data coincide.

In this case, the authentication data used for authentication and the check data obtained by encrypting the authentication data are transmitted from the server device and received by the authentication device. The authentication data is transmitted to the device to be authenticated by the authentication device. Further, by the authentication device, the reply data returned from the device to be authenticated and the check data transmitted from the server device are compared to authenticate the device to be authenticated, wherefore it is not necessary to include a circuit for generating authentication data and encryption and decryption circuits for encrypting and decrypting the authentication data, and it is possible to authenticate the device to be authenticated while a circuit scale increase in the authentication device is suppressed.

The authenticating-side transmitting section causes the first authenticating-side communicating section to transmit the received reply data to the server device if the reply data is received by the second authenticating-side communicating section; and the authenticating section authenticates the device to be authenticated based on a judgment result if the judgment result on the authentication based on the reply data obtained by the server device is received.

According to this construction, the authentication data transmitted from the server device is transmitted to the device to be authenticated via the authentication device. The reply data obtained by encrypting the authentication data using the encryption method and encryption key by the device to be authenticated is received by the second authenticating-side communicating section and transmitted to the server device by the first authenticating-side communicating section. If the judgment result on the authentication based on the reply data obtained by the server device is received by the first authenticating-side communicating section, the authentication of the device to be authenticated is confirmed based on the judgment result by the authenticating section.

In this case, the authentication data is transmitted to the device to be authenticated via the authentication device by the server device, and the reply data returned from the device to be authenticated is transmitted to the server device via the authentication device. In the server device, the authentication is judged based on the check data obtained by encrypting the authentication data and the reply data returned from the device to be authenticated, and this judgment result is transmitted to the authentication device. Since the device to be authenticated is authenticated based on this judgment result in the authentication device, the authentication device needs not include a circuit for generating authentication data and encryption and decryption circuits for encrypting and decrypting the authentication data, and can authenticate the device to be authenticated while a circuit scale increase in the authentication device is suppressed.

It is preferable that the device to be authenticated includes a first integrated circuit for ID tag having a first storage for storing a specified encryption key, a first receiving section for receiving the authentication data as a password, a first encryption data generating section for generating an encryption data by encrypting the password received by the receiving section by a preset encryption method using the encryption key stored in the storage and a first transmitting section for transmitting the encryption data generated by the encryption data generating section; that the first storage is used as the authenticated-side encryption key storage; that the first receiving section and the first transmitting section are used as the authenticated-side communicating section; that the first encryption data generating section is used as the encrypting section; and that the encryption data transmitted from the first transmitting section is used as the reply data.

According to this construction, the first storage of the first integrated circuit is used as the authenticated-side encryption key storage, the first receiving section and the first transmitting section thereof are used as the authenticating-side communicating section and the first encryption data generating section thereof is used as the encrypting section. Then, the cost of the device to be authenticated can be reduced as compared to the case where the authenticated-side encryption key storage, the authenticated-side communicating section and the encrypting section are constructed using individual parts or ASICs (Application Specific Integrated Circuits) since integrated circuits for so-called ID tags used, e.g. in logistics are distributed in large quantity as general-purpose goods in the marketplace and available at cheap price. Further, the development cost of the device to be authenticated can be reduced since there is no development cost as in the case where ASICs are developed or the function of the encrypting section is realized by software.

It is preferable that the server device includes a second integrated circuit for ID tag having a second storage for storing the same encryption key as the one stored in the first storage, a second receiving section for receiving the authentication data as a password and a second encryption data generating section for generating an encryption data by encrypting the password received by the second receiving section by the same encryption method as the one used in the first encryption data generating section using the encryption key stored in the second storage; that the second storage is used as the server-side encryption key storage; that the check data generating section causes the second integrated circuit to generate the encryption data by transmitting the authentication data to the second receiving section and generates the check data by receiving the encryption data transmitted from the second transmitting section as the check data.

According to this construction, the check data generating section can cause the second integrated circuit to encrypt the authentication data by the same encryption method as the one used in the first encryption data generating section using the encryption key stored in the second storage. Thus, software development cost for the encryption process as in the case of performing the encryption process in the check data generating section by software becomes unnecessary, whereby the development cost of the server device can be reduced.

It is preferable that the server device further includes a connecting portion to which the second integrated circuit is detachably attachable; and that the check data generating section transmits the authentication data to the second receiving section in the second integrated circuit attached to the connecting portion and receives the encryption data from the second transmitting section in the second integrated circuit via the connecting portion.

According to this construction, since the second integrated circuit is made detachably attachable by the connecting portion, authentication can be made by replacing the second integrated circuit attached to the connecting portion with an integrated circuit having the same encryption method as a first integrated circuit of a device to be authenticated even in the case of authenticating the device to be authenticated using a different encryption method. Therefore, authentication can be more easily made for devices to be authenticated using different kinds of encryption methods.

### INDUSTRIAL APPLICABILITY

According to the authentication system and the authentication device of the present invention, the authentication device needs not include a random number generation circuit for generating random numbers and a decryption circuit for decrypting an encryption data, wherefore authentication can be made for a device to be authenticated while a circuit scale increase in the authentication device is suppressed. Further, the authentication device is applicable to various devices such as charging devices, mobile phone terminals, portable personal computers, video cameras, portable gaming systems, digital cameras, portable MD players, portable CD players, portable cassette tape players, electric tools, vacuum cleaners, electric shavers, electric cars, and the device to be authenticated is applicable to various devices used in combination with the authentication device such as battery packs including secondary batteries and memory modules.

## Claims

1. An authentication system, comprising a device to be authenticated, an authentication device for authenticating the device to be authenticated, and a server device connected with the authentication device via a network,
wherein:
the server device includes:
a server-side encryption key storage for storing an encryption key for the authentication beforehand,
a check data generating section for generating check data by encrypting specified authentication data used for the authentication by a preset encryption method using the encryption key stored in the server-side encryption key storage,
a server-side communicating section for communicating with the authentication device via the network, and
a server-side transmitting section for causing the server-side communicating section to transmit the authentication data to the authentication device;
the authentication device includes:
a first authenticating-side communicating section for communicating with the server device via the network,
a second authenticating-side communicating section for communicating with the device to be authenticated, and
an authenticating-side transmitting section for causing the second authenticating-side communicating section to transmit the authentication data received by the first authenticating-side communicating section to the device to be authenticated;
the device to be authenticated includes:
an authenticated-side encryption key storage for storing the encryption key beforehand,
an authenticated-side communicating section for communicating with the authentication device, and
an encrypting section for, if the authentication data is received from the second authenticating-side communicating section by the authenticated-side communicating section, encrypting the received authentication data by the encryption method using the encryption key stored in the authenticated-side encryption key storage;
the authenticated-side communicating section transmits the data encrypted by the encrypting section as reply data to the second authenticating-side communicating section; and
the authentication device further includes an authenticating section for authenticating the device to be authenticated based on the reply data received by the second authenticating-side communicating section and the check data generated by the check data generating section.

2. An authentication system according to claim 1, wherein:
the server-side transmitting section causes the server-side communicating section to transmit the check data generated by the check data generating section to the first authenticating-side communicating section;
the authentication device further includes an authenticating-side data storage for storing the authentication data received from the server-side communicating section by the first authenticating-side communicating section and the check data in correspondence; and
the authenticating section compares the reply data received by the second authenticating-side communicating section and the check data stored in correspondence with the authentication data in the authenticating-side storage and judges a success of authentication if the two data coincide while judging a failure of authentication unless the two data coincide.

3. An authentication system according to claim 2, wherein:
the check data generating section encrypts a plurality of authentication data by the encryption method using encryption keys respectively stored in the server-side encryption key storage to generate a plurality of check data;
the server-side transmitting section causes the server-side communicating section to transmit the plurality of authentication data and the plurality of check data generated by the check data generating section to the first authenticating-side communicating section via the network;
the authenticating-side data storage stores the plurality of authentication data and the plurality of check data received by the first authenticating-side communicating section; and
the authenticating-side transmitting section causes the second authenticating-side communicating section to transmit any one of the plurality of authentication data stored in the authenticating-side storage to the authenticated-side communicating section.

4. An authentication system according to claim 2 or 3, further comprising an authentication data generating section for regularly generating the authentication data,
wherein:
the check data generating section generates the check data based on the authentication data regularly generated by the authentication data generating section; and
the server-side transmitting section causes the server-side communicating section to transmit the regularly generated authentication data and the check data generated based on the authentication data to the first authenticating-side communicating section via the network.

5. An authentication system according to claim 1, wherein:
the authenticating-side transmitting section causes the first authenticating-side communicating section to transmit the reply data received by the second authenticating-side communicating section to the server-side communicating section;
the server device further includes a server-side authenticating section for comparing the check data generated by the check data generating section and the reply data received by the server-side communicating section and judging a success of authentication if the two data coincide while judging a failure of authentication unless the two data coincide;
the server-side transmitting section causes the server-side communicating section to transmit a judgment result by the server-side authenticating section to the first authenticating-side communicating section; and
the authenticating section authenticates the device to be authenticated based on the judgment result received by the first authenticating-side communicating section.

6. An authentication system according to any one of claims 1 to 5, wherein:
the server device further includes:
an encryption key generating section for generating a new encryption key,
an update key information generating section for generating update key information by encrypting the generated new encryption key by the encryption method using the encryption key stored in the server-side encryption key storage if the new encryption key is generated by the encryption key generating section, and
an encryption key updating section for storing the generated new encryption key in the server-side encryption key storage if the new encryption key is generated by the encryption key generating section;
the server-side transmitting section causes the server-side communicating section to transmit the update key information generated by the update key information generating section to the first authenticating-side communicating section;
the authenticating-side transmitting section causes the second authenticating-side communicating section to transmit the received update key information to the authenticated-side communicating section if the update key information is received by the first authenticating-side communicating section; and
the device to be authenticated further includes:
a decrypting section for decrypting the received update key information using the encryption key stored in the authenticated-side encryption key storage if the update key information is received by the authenticated-side communicating section, and
an encryption key updating section for storing the encryption key decrypted by the decrypting section as a new encryption key in the authenticated-side encryption key storage.

7. An authentication system according to any one of claims 1 to 5, wherein:
the server-side encryption key storage further stores an update encryption key for encrypting a new encryption key;
the server device further includes:
an encryption key generating section for generating a new encryption key,
an update key information generating section for generating update key information by encrypting the generated new encryption key by the encryption method using the update encryption key stored in the server-side encryption key storage if the new encryption key is generated by the encryption key generating section, and
an encryption key updating section for storing the generated new encryption key in the server-side encryption key storage if the new encryption key is generated by the encryption key generating section;
the server-side transmitting section causes the server-side communicating section to transmit the update key information generated by the update key information generating section to the first authenticating-side communicating section;
the authenticating-side transmitting section causes the second authenticating-side communicating section to transmit the received update key information to the authenticated-side communicating section if the update key information is received by the first authenticating-side communicating section;
the authenticated-side encryption key further stores the update encryption key beforehand; and
the device to be authenticated further includes:
a decrypting section for decrypting the received update key information using the update encryption key stored in the authenticated-side encryption key storage if the update key information is received by the authenticated-side communicating section, and
an encryption key updating section for storing the encryption key decrypted by the decrypting section as a new encryption key in the authenticated-side encryption key storage.

8. An authentication system according to claim 6 or 7, wherein the server device further includes an encryption key generation administrating section for causing the encryption key generating section to generate the new encryption key regularly or as scheduled.

9. An authentication system according to claim 8, wherein the schedule for generating the encryption key is programmed utilizing a calendar timer, the number of accesses for authentication or a cumulative operating time of the device.

10. An authentication system according to any one of claims 1 to 9, wherein:
the authentication device is a charging device including:
a connection terminal connectable with a secondary battery,
a charging section for charging the secondary battery connected with the connection terminal and
a charge controller for controlling the operation of the charging section in accordance with the judgment result of the authenticating section; and
the device to be authenticated is a battery pack further including the secondary battery.

11. An authentication system according to claim 10, wherein the charge controller prohibits the charging of the secondary battery by the charging section if the failure of authentication was judged by the authenticating section.

12. An authentication system according to claim 10, wherein the charge controller sets a voltage to be supplied by the charging section to charge the secondary battery lower than a voltage supplied to charge the secondary battery by the charging section in the case of judging the success of authentication by the authenticating section if the failure of authentication was judged by the authenticating section.

13. An authentication system according to any one of claims 10 to 12, wherein:
the authentication device is a mobile phone terminal further including a phone processing section for conducting radio communication by power supplied from the secondary battery; and
the network is a mobile phone line.

14. An authentication device connected with a server device via a network for authenticating a device to be authenticated, comprising:
a first authenticating-side communicating section for communicating with the server device via the network;
a second authenticating-side communicating section for communicating with the device to be authenticated;
an authenticating-side transmitting section for, if specified authentication data transmitted from the server device is received by the first authenticating-side communicating section, causing the second authenticating-side communicating section to transmit the received authentication data to the device to be authenticated; and
an authenticating section for, if reply data obtained by encrypting the authentication data using the encryption method and encryption key by the device to be authenticated is received by the second authenticating side communicating section, authenticating the device to be authenticated based on check data obtained by encrypting the authentication data using preset encryption method and encryption key and the reply data received by the second authenticating-side communicating section.

15. An authentication device according to claim 14, wherein:
the check data is transmitted from the server device;
the authentication device further comprises an authenticating-side data storage for storing the received check data if the check data transmitted from the server device is received by the first authenticating-side communicating section; and
the authenticating section compares the received reply data and the check data stored in the authenticating-side storage if the reply data is received by the second authenticating-side communicating section and judges a success of authentication if the two data coincide while judging a failure of authentication unless the two data coincide.

16. An authentication device according to claim 14, wherein:
the authenticating-side transmitting section causes the first authenticating-side communicating section to transmit the received reply data to the server device if the reply data is received by the second authenticating-side communicating section; and
the authenticating section authenticates the device to be authenticated based on a judgment result if the judgment result on the authentication based on the reply data obtained by the server device is received.

17. An authentication system according to any one of claims 1 to 13, wherein:
the device to be authenticated includes a first integrated circuit for ID tag having:
a first storage for storing a specified encryption key,
a first receiving section for receiving the authentication data as a password,
a first encryption data generating section for generating an encryption data by encrypting the password received by the receiving section by a preset encryption method using the encryption key stored in the storage, and
a first transmitting section for transmitting the encryption data generated by the encryption data generating section;
the first storage is used as the authenticated-side encryption key storage;
the first receiving section and the first transmitting section are used as the authenticated-side communicating section;
the first encryption data generating section is used as the encrypting section; and
the encryption data transmitted from the first transmitting section is used as the reply data.

18. An authentication system according to claim 17, wherein:
the server device includes a second integrated circuit for ID tag having:
a second storage for storing the same encryption key as the one stored in the first storage,
a second receiving section for receiving the authentication data as a password, and
a second encryption data generating section for generating an encryption data by encrypting the password received by the second receiving section by the same encryption method as the one used in the first encryption data generating section using the encryption key stored in the second storage;
the second storage is used as the server-side encryption key storage; and
the check data generating section causes the second integrated circuit to generate the encryption data by transmitting the authentication data to the second receiving section and generates the check data by receiving the encryption data transmitted from the second transmitting section as the check data.

19. An authentication system according to claim 18, wherein:
the server device further includes a connecting portion to which the second integrated circuit is detachably attachable; and
the check data generating section transmits the authentication data to the second receiving section in the second integrated circuit attached to the connecting portion and receives the encryption data from the second transmitting section in the second integrated circuit via the connecting portion.
